(19) Europäisches Patentamt
European Patent Office
Office européen des brevets

(11) EP 4 023 330 A1

(12) EUROPEAN PATENT APPLICATION

(43) Date of publication:
**06.07.2022 Bulletin 2022/27**

(21) Application number: **22151286.6**

(22) Date of filing: **15.12.2010**

(51) International Patent Classification (IPC):
***B01J 20/28*** *(2006.01)* ***B01J 20/282*** *(2006.01)*
***B01J 20/286*** *(2006.01)*

(52) Cooperative Patent Classification (CPC):
**B01J 20/28004; B01J 20/28076; B01J 20/282; B01J 20/286;** B01D 15/34; B01J 2220/54; B01J 2220/82

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2009 US 28658209 P**
**17.06.2010 US 35597010 P**

(62) Document number(s) of the earlier application(s) in accordance with Art. 76 EPC:
**10842551.3 / 2 513 645**

(71) Applicant: **Waters Technologies Corporation**
**Milford, MA 01757 (US)**

(72) Inventors:
- **BOUVIER, Edouard, S.P.**
  **Stow, MA, 01775 (US)**
- **WYNDHAM, Kevin, D.**
  **Douglas, MA, 01516 (US)**
- **WALTER, Thomas, H.**
  **Ashland, MA, 01721 (US)**
- **NEUE, Uwe, D.**
  **Ashland, MA, 01721 (US)**

(74) Representative: **Forresters IP LLP**
**Skygarden**
**Erika-Mann-Straße 11**
**80636 München (DE)**

Remarks:
This application was filed on 13-01-2022 as a divisional application to the application mentioned under INID code 62.

# (54) DEVICE AND METHODS FOR PERFORMING SIZE EXCLUSION CHROMATOGRAPHY

(57) The present invention is directed to a device and a method for performing size exclusion chromatography. Embodiments of the present invention feature devices and methods for size exclusion chromatography at normal high performance liquid chromatography or ultra performance liquid chromatography pressures and above using small particles.

EP 4 023 330 A1

## Description

### Related Applications

The application claims priority to U.S. provisonal patent application Ser. Nos. 61/286,582, filed December 15, 2009, and 61/355,970, filed June 17, 2009, the entire disclosures of which are incorporated herein by this reference.

### Field of the Invention

The present invention is directed to a device and a method for performing size exclusion chromatography. Embodiments of the present invention feature devices and methods for size exclusion chromatography at normal high performance liquid chromatography or ultra performance liquid chromatography pressures and above using small particles.

### Background of the Invention

This application will use the following terms as defined below unless the context of the text in which the term appears requires a different meaning.

Chromatography is a separation method for concentrating or isolating one or more compounds found in a mixture. The compounds are normally present in a sample. This paper uses the term "sample" broadly to represent any mixture which an individual desires to analyze. The term "mixture" is used in the sense of a fluid containing one or more dissolved compounds. The fluid may comprise water and/or other liquids and gases. A compound of interest is referred to as an analyte.

Chromatography is a differential migration process. Compounds in a mixture traverse a chromatographic column at different rates, leading to their separation. The migration occurs by convection of a fluid phase, referred to as the mobile phase, in relationship to a packed bed of particles or a porous monolith structure, referred to as the stationary phase. In some modes of chromatography, differential migration occurs by differences in affinity of analytes with the stationary phase and mobile phase.

Size exclusion chromatography (SEC) is a type of chromatography in which the analytes in a mixture are separated or isolated on the basis of hydrodynamic radius. In SEC, separation occurs because of the differences in the ability of analytes to probe the volume of the porous stationary phase media. See, for example, A.M. Striegel et. al. Modern Size-Exclusion Chromatography: Practice of Gel Permeation and Gel Filtration Chromatography, 2nd Edition, Wiley, NJ, 2009. SEC is typically used for the separation of large molecules or complexes of molecules. For example, without limitation, many large molecules of biological origin, such as deoxyribonucleic acids (DNAs), ribonucleic acids (RNAs), proteins, polysaccharides and fragments and complexes thereof are analyzed by SEC. Synthetic polymers, plastics and the like are also analyzed by SEC.

SEC is normally performed using a column having a packed bed of particles. The packed bed of particles is a separation media or stationary phase through which the mobile phase will flow. The column is placed in fluid communication with a pump and a sample injector. The sample mixture is loaded onto the column under pressure by the sample injector and the mixture and mobile phase are pushed through the column by the pump. The compounds in the mixture leave or elute from the column with the largest compounds exiting first and the smallest molecules leaving last.

The column is placed in fluid communication with a detector, which can detect the change in the nature of the solution as the solution exits the column. The detector will register and record these changes as a plot, referred to as a chromatogram, which is used to determine the presence or absence of the analyte. The time at which the analyte leaves the column is an indication of the size of the molecule. Molecular weight of the molecules can be estimated using standard calibration curves. Examples of detectors used for size-exclusion chromatography are, without limitation, refractive index detectors, UV detectors, light-scattering detectors and mass spectrometers.

It is desired to have columns for use with SEC techniques which can operate at pressures greater than 5,000 psi and fast flow rates to speed the time of analysis. It is also desired to have additional or increased efficiency and resolution; reduced solvent usage; and improved compatibility with advanced detectors. It is desired to have columns with a stationary phase which has a well defined pore structure and particle size to produce highly reproducible results. Finally, It is desired to have columns with stationary phases which have surface modifications that are compatible with biological polymers.

### Summary of the Invention

Embodiments of the present invention are directed to devices and methods for performing SEC. Embodiments of the present invention operate at normal high performance liquid chromatography pressures (HPLC) as well as at Ultra

High performance liquid chromatography pressures (UHPLC), which extend from about 1,000 psi to about 10,000 psi and greater and fast flow rates to speed the time of analysis. Embodiments of the present invention feature a stationary phase which has a well-defined pore structure and particle size to produce highly reproducible results. And, embodiments of the present invention feature stationary phases which have surface modifications that are compatible with biological polymers.

In one aspect, the invention provides a device for performing size exclusion chromatography comprising:

a housing having at least one wall defining a chamber having an entrance and an exit; and

a stationary phase material comprising a core and surface composition held in said chamber;

wherein said stationary phase material comprises particles or a monolith represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte.

In certain embodiments of the device for performing size exclusion chromatography according to the invention, W and Q occupy free valences of the core composition, X, or the surface of the core composition.

In other embodiments of the device of the invention, W and Q are selected to form a surface composition. In other embodiments, X may be selected to form a block polymer or group of block polymers.

In still other embodiments the stationary phase material comprises particles. In embodiments of the device of the invention wherein the stationary phase material comprises particles, the particles of the particulate stationary phase material ,ay have diameters with a mean size distribution of 0.4 -3.0 microns; 0.5-3.0; 0.6-3.0; 0.7-3.0; 0.9-3.0 or 1.0-3.0 microns.

In other embodiments of the device of the invention, the stationary phase material comprises a monolith. In embodiments of the device of the invention wherein the stationary phase material comprises particles, the monolith of the stationary phase material exhibits the chromatographic efficiency and permeability of a particle bed packed with particles having a mean size distribution of 0.4 -3.0 microns ; 0.5-3.0; 0.6-3.0; 0.7-3.0; 0.9-3.0 or 1.0-3.0 microns. In other embodiments of the device of the invention, the particles or the monolith of the stationary phase material has a pore volume of 0.8 to 1.7 $cm^3/g$; 0.9 to 1.6 $cm^3/g$; 1.0 to 1.5 $cm^3/g$' or 1.1 to 1.5 $cm^3/g$.

In yet other embodiments of the device of the invention, chamber is capbable of performing size exclusion chromatography at a column inlet pressuregreater than 1,000 psi; greater than 2,000 psi; greater than 3,000 psi; greater than 4,000 psi; greater than 5,000 psi; greater than 6,000 psi; greater than 7,000 psi; greater than 8,000 psi; greater than 9,000 psi; greater than 10,000 psi; greater than 15,000 psi; or greater than 20,000 psi. In still other embodiments column inlet pressure is from about 1,000 psi to about 20,000 psi; from about 5,000 psi to about 20,000 psi; from about 7,000 psi to about 20,000 psi; from about 10,000 psi to about 20,000 psi; about 1,000 psi to about 15,000 psi; or from about 5,000 to about 15,000 psi.

In certain embodiments of the device of the invention, X is a silica core, a titanium oxide core, an aluminum oxide core, an organic-inorganic hybrid core, or an organic-inorganic hybrid core comprising an aliphatic bridged silane.

In specific embodiments, X is an organic-inorganic hybrid core comprising a aliphatic bridged silane. In certain other specific embodiments, the aliphatic group of the aliphatic bridged silane is ethylene.

In other embodiments of the device of the invention, Q is a hydrophilic group, a hydrophobic group or absent.

In some embodiments of the device of the invention, wherein Q is a hydrophilic group, Q is an aliphatic group. In other embodiments, said aliphatic group is an aliphatic diol.

In still other embodiments, Q is represented by

**Formula 2**

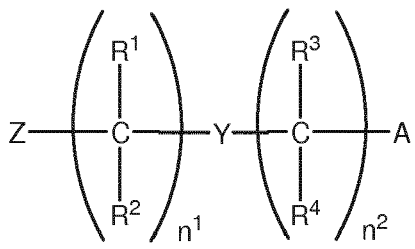

**Formula 2**

wherein

**$n^1$** an integer from 0-30;
**$n^2$** an integer from 0-30;

each occurrence of **$R^1$, $R^2$, $R^3$** and **$R^4$** independently represents hydrogen, fluoro, lower alkyl, a protected or deprotected alcohol, a zwiterion, or a group **Z**;

**Z** represents:

**a)** a surface attachment group produced by formation of covalent or non-covalent bond between the surface of the stationay phase material with a moiety of **Formula 3:**

$(B^1)_x(R^5)_y(R^6)_zSi$- **Formula 3:**

wherein **x** is an integer from 1-3,

**y** is an integer from 0-2,
**z** is an integer from 0-2,
and **x+y+z** = 3

each occurrence of **$R^5$** and **$R^6$** independently represents methyl, ethyl, *n*-butyl, *iso*-butyl, *tert*-butyl, *iso*-propyl, thexyl, substituted or unsubstituted aryl, cyclic alkyl, branched alkyl, lower alkyl, a protected or deprotected alcohol, or a zwiterion group;
**$B^1$** represents $-OR^7$, $-NR^{7'}R^{7''}$, $-OSO_2CF_3$, or -Cl; where each of **$R^7$, $R^{7'}$** and **$R^{7''}$** represents hydrogen, methyl, ethyl, *n*-butyl, *iso*-butyl, *tert-butyl, iso*-propyl, thexyl, phenyl, branched alkyl or lower alkyl;

**b)** a direct attachment to a surface hybrid group of X through a direct carbon-carbon bond formation or through a heteroatom, ester, ether, thioether, amine, amide, imide, urea, carbonate, carbamate, heterocycle, triazole, or urethane linkage; or

**c)** an adsorbed group that is not covalently attached to the surface of the stationary phase material;

**d)** a surface attachment group produced by formation of a covalent bond between the surface of the stationary phase material, when W is hydrogen, by reaction with a vinyl or alkynyl group;

**Y** represents a direct bond; a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrates, a dendrimer or dendrigraphs, or a zwitterion group; and

**A** represents

i.) a hydrophilic terminal group;
ii.) hydrogen, fluoro, fluoroalkyl, lower alkyl, or group **Z;** or
iii.) a functionalizable group.

In certain embodiments of the device of the invention, wherein Q is an aliphatic diol of Formula 2, $\mathbf{n^1}$ an integer from 2-18, or from 2-6. In other embodiments of the device of the invention, wherein Q is an aliphatic diol of Formula 2, $\mathbf{n^2}$ an integer from 0-18 or from 0-6. In still other embodiments of the device of the invention, wherein Q is an aliphatic diol of Formula 2, $\mathbf{n^1}$ an integer from 2-18 and $\mathbf{n^2}$ an integer from 0-18, $\mathbf{n^1}$ an integer from 2-6 and wherein $\mathbf{n^2}$ an integer from 0-18, $\mathbf{n^1}$ an integer from 2-18 and $\mathbf{n^2}$ an integer from 0-6, or $\mathbf{n^1}$ an integer from 2-6 and and $\mathbf{n^2}$ an integer from 0-6.

In yet other embodiments of the device of the invention, wherein Q is an aliphatic diol of Formula 2, **A** represents i) a hydrophilic terminal group and said hydrophilic terminal group is a protected or deprotected forms of an alcohol, diol, glycidyl ether, epoxy, triol, polyol, pentaerythritol, pentaerythritol ethoxylate, 1,3-dioxane-5,5-dimethanol, tris(hydroxymethyl)aminomethane, tris(hydroxymethyl)aminomethane polyglycol ether, ethylene glycol, propylene glycol, poly(ethylene glycol), poly(propylene glycol), a mono-valent, divalent, or polyvalent carbohydrate group, a multi-antennary carbohydrate, a dendrimer containing peripheral hydrophilic groups, a dendrigraph containing peripheral hydrophilic groups, or a zwitterion group.

In still other embodiments of the device of the invention, wherein Q is an aliphatic diol of Formula 2, **A** represents ii.) hydrogen, fluoro, methyl, ethyl, n-butyl, t-butyl, i-propyl, lower alkyl, or group **Z**.

In still yet other embodiments of the device of the invention, wherein Q is of Formula 2, **A** represents iii.) a functionalizable group, and said functionalizable group is a protected or deprotected form of an amine, alcohol, silane, alkene, thiol, azide, or alkyne. In some embodiments, said functionalizable group can give rise to a new surface group in a subsequent reaction step wherein said reaction step is coupling, metathesis, radical addition, hydrosilylation, condensation, click, or polymerization.

In certain embodiments of the device of the invention, Z represents an direct attachment to a surface hybrid group through a direct carbon-carbon bond formation or through a heteroatom, ester, ether, thioether, amine, amide, imide, urea, carbonate, carbamate, heterocycle, triazole, or urethane linkage.

In other embodiments, Z represents an adsorbed, surface group that is not covalently attached to the surface of the material. This surface group can be a cross-linked polymer, or other adsorbed surface group. Examples include, but are not limited to alcohols, amines, thiols, polyamines, dedrimers, or polymers.

In some embodiments, of the device of the invention, the housing is equipped with one or more frits to contain the stationary phase material. In other embodiments, the housing is equipped with one or more fittings capable of placing the device in fluid communication with a sample injection device, a detector or both.

In another aspect, the invention provides a method of performing size exclusion chromatography comprising the steps of

A.) providing a housing having at least one wall defining a chamber having an entrance and an exit; and a stationary phase material comprising a core and surface composition held in said chamber;
wherein said particulate stationary phase comprises particles which have a core composition and a surface composition represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte;

B.) loading a sample on said chamber at a column inlet pressureof greater than 1,000 psi to flow the sample through said stationary phase media; and
C.) separating the sample into one or more compositions by size.

In certain embodiments of the method of the invention, column inlet pressure is greater than 2,000 psi; greater than 3,000 psi; greater than 4,000 psi; greater than 5,000 psi; greater than 6,000 psi; greater than 7,000 psi; greater than 8,000 psi; greater than 9,000 psi; greater than 10,000 psi; greater than 15,000 psi; or greater than 20,000 psi. In still other embodiments column inlet pressure is from about 1,000 psi to about 20,000 psi; from about 5,000 psi to about

20,000 psi; from about 7,000 psi to about 20,000 psi; from about 10,000 psi to about 20,000 psi; about 1,000 psi to about 15,000 psi; or from about 5,000 to about 15,000 psi.

In another embodiment of the method of the invention, the method further comprises the step of D.) isolating the one or more compositions.

In yet another embodiment of the method of the invention, the method further comprises the step of E.) detecting the one or more compositions.

In still another embodiment of the method of the invention, the method further comprises the step of

D.) isolating the one or more compositions; and
E.) detecting the one or more compositions.

In certain embodiments of the method of the invention, wherein the sample is a biopolymer. In embodiments wherein the sample is a biopolymer, Q may be a hydrophilic. In some embodiments, Q is an aliphatic group. In other embodiments, said aliphatic group is an aliphatic diol. In still other embodiments, Q is represented by **Formula 2**

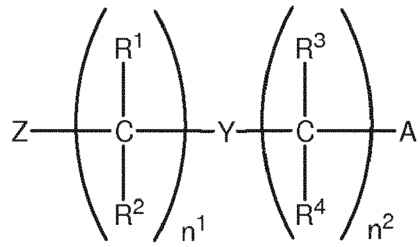

**Formula 2**

wherein

$\mathbf{n^1}$ an integer from 0-30;
$\mathbf{n^2}$ an integer from 0-30;

each occurrence of $\mathbf{R^1}$, $\mathbf{R^2}$, $\mathbf{R^3}$ and $\mathbf{R^4}$ independently represents hydrogen, fluoro, lower alkyl, a protected or deprotected alcohol, a zwiterion, or a group **Z;**

**Z** represents:

**a)** a surface attachment group produced by formation of covalent or non-covalent bond between the surface of the stationay phase material with a moiety of **Formula 3:**

$$(B^1)_x(R^5)_y(R^6)_zSi- \qquad \textbf{Formula 3:}$$

wherein **x** is an integer from 1-3,

**y** is an integer from 0-2,
**z** is an integer from 0-2,
and **x+y+z** = 3

each occurrence of $\mathbf{R^5}$ and $\mathbf{R^6}$ independently represents methyl, ethyl, *n*-butyl, *iso*-butyl, *tert*-butyl, *iso*-propyl, thexyl, substituted or unsubstituted aryl, cyclic alkyl, branched alkyl, lower alkyl, a protected or deprotected alcohol, or a zwiterion group;

$\mathbf{B^1}$ represents $-OR^7$, $-NR^{7'}R^{7''}$, $-OSO_2CF_3$, or -Cl; where each of $\mathbf{R^7}$, $\mathbf{R^{7'}}$ and $\mathbf{R^{7''}}$ represents hydrogen, methyl, ethyl, *n*-butyl, *iso*-butyl, *tert-butyl,* iso-propyl, thexyl, phenyl, branched alkyl or lower alkyl;

**b)** a direct attachment to a surface hybrid group of X through a direct carbon-carbon bond formation or through a heteroatom, ester, ether, thioether, amine, amide, imide, urea, carbonate, carbamate, heterocycle, triazole, or urethane linkage; or

**c)** an adsorbed group that is not covalently attached to the surface of the stationary phase material;

**d)** a surface attachment group produced by formation of a covalent bond between the surface of the stationary phase material, when W is hydrogen, by reaction with a vinyl or alkynyl group;

**Y** represents a direct bond; a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrates, a dendrimer or dendrigraphs, or a zwitterion group; and

**A** represents

i.) a hydrophilic terminal group;
ii.) hydrogen, fluoro, fluoroalkyl, lower alkyl, or group **Z;** or
iii.) a functionalizable group.

In other embodiments of the method of the invention, the sample is a synthetic organic polymer. In embodiments wherein the sample is a synthetic organic polymer, Q may be a hydrophobic moiety.
In yet another aspect, the invention provides a method of reducing the incidence of noise obtained by a light scattering detector during size exclusion chromatography exclusion chromatography comprising the steps of

A.) providing a housing having at least one wall defining a chamber having an entrance and an exit; and a stationary phase material comprising a core and surface composition held in said chamber; wherein said stationary phase material comprises particles or a monolith represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte.

B.) loading a sample on said stationary material said chamber at a column inlet pressureof greater than 1,000 psi and flowing the sample through said stationary phase media;

C.) separating the sample into one or more compositions by size; and

D.) detecting the one or more compositions using a light scattering detector

In still another aspect, the invention provides a method of reducing the incidence of ghost peaks obtained by a light scattering detector during size exclusion chromatography exclusion chromatography comprising the steps of

A.) providing a housing having at least one wall defining a chamber having an entrance and an exit; and a stationary phase material comprising a core and surface composition held in said chamber; wherein said stationary phase material comprises particles or a monolith represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte

B.) loading a sample on said stationary material said chamber at a column inlet pressureof greater than 1,000 psi and flowing the sample through said stationary phase media;

C.) separating the sample into one or more compositions by size; and

D.) detecting the one or more compositions using a light scattering detector.

These and other features and advantages of the present invention will be apparent to those skilled in the art upon viewing the drawing described below and reading the detailed description that follows.

## Brief Description of the Drawings

Figure 1 depicts a device in accordance with the present invention.
Figure 2 depicts results of SEC in accordance with the present invention.
Figure 3 depicts a H-u curve for a column packed with Prototype "K", made in accordance with the invention. Column dimensions 4.6×150mm. Flow rate range 0.1-0.7 mL/min.
Figure 4 depicts a H-u curve for Prototype "D". Column dimensions 4.6×150mm. Flow rate range 0.1-0.7 mL/min.
Figure 5 depicts a normalized calibration curve for columns packed with materials as described in Table 6. Slopes were obtained from the linear region of each curve.
Figure 6 depicts a plot of normalized slope vs. Specific Pore Volume obtained for each curve shown in Figure 5. Slopes were determined for the linear range of each curve.
Figure 7 depicts the effect of flow rate on the separation of a monoclonal antibody monomer and dimer with a column packed with Prototype "K" made in accordance with the invention, 4.6x150mm.
Figure 8 depicts the comparative effect of flow rate on the separation of a monoclonal antibody monomer and dimer with Comparative column "L", 4.6x300mm.
Figure 9 depicts the effect of flow rate on plate height and resolution for separation of monoclonal antibody monomer and dimer a column packed with Prototype "K", 4.6x150.
Figure 10 depicts the effect of flow rate on plate height and resolution for separation of monoclonal antibody monomer and dimer. with Comparative Column "L" , 4.6x300.
Figure 11 depicts the effect of temperature on the separation of (1) Thyroglobulin, (2) IgG1, (3) BSA, (4) Myoglobin, (5) Uracil. Top: a column packed with Prototype "K", 4.6x150 mm. Bottom: Comparative column "L", 4.6x300 mm.
Figure 12 depicts the effect of salt type on retention of analytes. Mobile phase consisted of 10 mM sodium phosphate, pH 6.8 with 200 mM of given salt. In the case of phosphate, salt concentration was 100 mM.
Figure 13 further depicts the effect of salt type on retention of analytes. Mobile phase consisted of 10 mM sodium phosphate, pH 6.8 with 200 mM of given salt. In the case of phosphate, salt concentration was 100 mM.
Figure 14 depicts the effect of ionic strength on the retention of the basic protein lysozyme using (a) a column made in accordance with the invention; and (b) a comparative column.
Figure 15 depicts a chromatogram from the separation of BSA using a column with Prototype "K" run at flow rates of 0.2 mL/min. The Figure show traces from both the UV and light-scattering detectors.
Figure 16 depicts a chromatogram from the separation of BSA using a column with Prototype "K" run at flow rates of 0.5 mL/min. The Figure show traces from both the UV and light-scattering detectors.
Figure 17 depicts a chromatogram from the separation of BSA using Comparative Column L run at flow rates of 0.3 mL/min. The Figure show traces from both the UV and light-scattering detectors.
Figure 18 depicts a chromatogram from the separation of BSA using Comparative Column M run at flow rates of 0.3 mL/min. The Figure show traces from both the UV and light-scattering detectors.
Figure 19 depicts a chromatogram from the separation of BSA using Comparative Column N run at flow rates of 0.3 mL/min. The Figure show traces from both the UV and light-scattering detectors.

## Detailed Description of the Invention

Embodiments of the present invention are now described in detail as devices and methods for performing SEC with the understanding that the such devices and methods are preferred devices and methods. Such devices and methods constitute what the inventors now believe to be the best mode of practicing the invention. Those skilled in the art will recognize that such devices and methods are capable of modification and alteration.

Turning now to Figure 1, a device embodying features of the present invention, generally designated by the numeral 11, is depicted. Device 11, for performing SEC, comprises the following major elements or components: a

housing 13 and a particulate stationary phase media 15.

The housing 13 has at least one wall 17 defining a chamber 19. As depicted, the wall 17 is in the form of a cylinder having an interior surface 21 and an exterior surface 23. Although described herein as a column, the housing 13 and wall 17 defining a chamber 19 may assume any shape. For example, without limitation, the housing 13 may be a planar chip-like structure in which the chamber 19 is formed within.

As depicted, the at least one wall 17 defines a chamber having an entrance opening 25 and an exit opening 27. Although the entrance opening 25 is obscured in Figure 1, the entrance opening 25 and exit opening 27 share several features. The entrance opening 25 and exit opening 27 have a frit of which only frit 29 is shown with respect to exit opening 27. As depicted, the frit 29 is an element which contains the stationary phase within the column, but allows mobile phase to pass through. In certain embodiments, the frit may be comprised of sintered metal or similar material. In other embodiments, the frit may also be comprised of a binder or glue that holds the particles in the bed together, but is porous enough to allow fluid flow through the bed. In still other embodiments, the stationary phase material may be a monolith. In such embodiments, a frit element may not be required.

The at least one wall 17 has first connection means at or about the entrance opening 25 and a second connection means at or about the exit opening 27. The first connection means comprises a fitting nut 37 held to the at least wall 17 by cooperating threads [not shown]. Similarly the second connection means comprises a second fitting nut 39 held to the at least one wall 17 by cooperating threads 41. First and second connection means may comprise cooperating fittings, clamps, interlocking grooves and the like [not shown]. First connection means and second connection means may also comprise ferrules, seals, O-rings and the like [not shown] which have been omitted from the drawing for simplicity. The entrance opening 25 of chamber 17 is in fluid communication with a source of fluid and sample depicted in block schematic form by numeral 43. A preferred source of fluid and sample has an operating pressure in the normal HPLC or UPLC range of about 5,000psi. However, particles and the device 11 are capable of operating pressures of greater than 1,000 psi; greater than 2,000 psi; greater than 3,000 psi; greater than 4,000 psi; greater than 5,000 psi; greater than 6,000 psi; greater than 7,000 psi; greater than 8,000 psi; greater than 9,000 psi; or greater than 10,000 psi. In still other embodiments of the device of the invention, particles and the device are capable of operating pressures from about 1,000 psi to about 15,000 psi; from about 5,000 psi to about 15,000 psi; from about 7,000 psi to about 15,000 psi; from about 10,000 psi to about 15,000 psi; about 1,000 psi to about 10,000 psi; or from about 5,000 to about 10,000 psi.

In certain specific embodiments, the source of fluid and sample is an ACQUITY ® UPLC® separation module (Waters Corporation, Milford, Massachusetts, USA).

The exit opening 27 of chamber 17 is in fluid communication with a detector 45. Numerous detectors are available; however, a specific detector is a Waters ACQUITY® UPLC® Tunable UV Detector (Waters Corporation, Milford, Massachusetts, USA).

Particulate stationary phase media 15 is held in the chamber 17. The particulate stationary phase media 15 comprises particles, which are not drawn to scale in Figure 1. The particles are generally spheres but can be any shape useful in chromatography. The particles generally have a size distribution in which the average diameter is 1-3 microns.

***Definitions***

As used above, the term "aliphatic group" includes organic compounds characterized by straight or branched chains, typically having between 1 and 22 carbon atoms.

Aliphatic groups include alkyl groups, alkenyl groups and alkynyl groups. In complex structures, the chains can be branched or cross-linked. Alkyl groups include saturated hydrocarbons having one or more carbon atoms, including straight-chain alkyl groups and branched-chain alkyl groups. Such hydrocarbon moieties may be substituted on one or more carbons with, for example, a halogen, a hydroxyl, a thiol, an amino, an alkoxy, an alkylcarboxy, an alkylthio, or a nitro group. Unless the number of carbons is otherwise specified, "lower aliphatic" as used herein means an aliphatic group, as defined above (*e.g.,* lower alkyl, lower alkenyl, lower alkynyl), but having from one to six carbon atoms. Representative of such lower aliphatic groups, *e.g.,* lower alkyl groups, are methyl, ethyl, n-propyl, isopropyl, 2-chloropropyl, n-butyl, sec-butyl, 2-aminobutyl, isobutyl, tert-butyl, 3-thiopentyl and the like. As used herein, the term "nitro" means $-NO_2$; the term "halogen" designates -F, -Cl, -Br or -I; the term "thiol" means SH; and the term "hydroxyl" means -OH. Thus, the term "alkylamino" as used herein means an alkyl group, as defined above, having an amino group attached thereto. Suitable alkylamino groups include groups having 1 to about 12 carbon atoms, or from 1 to about 6 carbon atoms. The term "alkylthio" refers to an alkyl group, as defined above, having a sulfhydryl group attached thereto. Suitable alkylthio groups include groups having 1 to about 12 carbon atoms, or from 1 to about 6 carbon atoms. The term "alkylcarboxyl" as used herein means an alkyl group, as defined above, having a carboxyl group attached thereto. The term "alkoxy" as used herein means an alkyl group, as defined above, having an oxygen atom attached thereto. Representative alkoxy groups include groups having 1 to about 12 carbon atoms, or 1 to about 6 carbon atoms, e.g., methoxy, ethoxy, propoxy, tert-butoxy and the like. The terms "alkenyl" and "alkynyl" refer to unsaturated aliphatic groups analogous to alkyls, but which contain at least one double or triple bond respectively. Suitable alkenyl and alkynyl groups

include groups having 2 to about 12 carbon atoms, or from 1 to about 6 carbon atoms.

The term "alicyclic group" includes closed ring structures of three or more carbon atoms. Alicyclic groups include cycloparaffins or naphthenes which are saturated cyclic hydrocarbons, cycloolefins, which are unsaturated with two or more double bonds, and cycloacetylenes which have a triple bond. They do not include aromatic groups. Examples of cycloparaffins include cyclopropane, cyclohexane and cyclopentane. Examples of cycloolefins include cyclopentadiene and cyclooctatetraene. Alicyclic groups also include fused ring structures and substituted alicyclic groups such as alkyl substituted alicyclic groups. In the instance of the alicyclics such substituents can further comprise a lower alkyl, a lower alkenyl, a lower alkoxy, a lower alkylthio, a lower alkylamino, a lower alkylcarboxyl, a nitro, a hydroxyl, - $CF_3$, -CN, or the like.

The term "heterocyclic group" includes closed ring structures in which one or more of the atoms in the ring is an element other than carbon, for example, nitrogen, sulfur, or oxygen. Heterocyclic groups can be saturated or unsaturated and heterocyclic groups such as pyrrole and furan can have aromatic character. They include fused ring structures such as quinoline and isoquinoline. Other examples of heterocyclic groups include pyridine and purine. Heterocyclic groups can also be substituted at one or more constituent atoms with, for example, a halogen, a lower alkyl, a lower alkenyl, a lower alkoxy, a lower alkylthio, a lower alkylamino, a lower alkylcarboxyl, a nitro, a hydroxyl, -$CF_3$, -CN, or the like. Suitable heteroaromatic and heteroalicyclic groups generally will have 1 to 3 separate or fused rings with 3 to about 8 members per ring and one or more N, O or S atoms, e.g. coumarinyl, quinolinyl, pyridyl, pyrazinyl, pyrimidyl, furyl, pyrrolyl, thienyl, thiazolyl, oxazolyl, imidazolyl, indolyl, benzofuranyl, benzothiazolyl, tetrahydrofuranyl, tetrahydropyranyl, piperidinyl, morpholino and pyrrolidinyl.

The term "aromatic group" includes unsaturated cyclic hydrocarbons containing one or more rings. Aromatic groups include 5- and 6-membered single-ring groups which may include from zero to four heteroatoms, for example, benzene, pyrrole, furan, thiophene, imidazole, oxazole, thiazole, triazole, pyrazole, pyridine, pyrazine, pyridazine and pyrimidine and the like. The aromatic ring may be substituted at one or more ring positions with, for example, a halogen, a lower alkyl, a lower alkenyl, a lower alkoxy, a lower alkylthio, a lower alkylamino, a lower alkylcarboxyl, a nitro, a hydroxyl, -$CF_3$, -CN, or the like.

The term "alkyl" includes saturated aliphatic groups, including straight-chain alkyl groups, branched-chain alkyl groups, cycloalkyl (alicyclic) groups, alkyl substituted cycloalkyl groups and cycloalkyl substituted alkyl groups. In certain embodiments, a straight chain or branched chain alkyl has 30 or fewer carbon atoms in its backbone, *e.g.*, $C_1$-$C_{30}$ for straight chain or $C_3$-$C_{30}$ for branched chain. In certain embodiments, a straight chain or branched chain alkyl has 20 or fewer carbon atoms in its backbone, *e.g.*, $C_1$-$C_{20}$ for straight chain or $C_3$-$C_{20}$ for branched chain, and in some embodiments 18 or fewer. Likewise, particular cycloalkyls have from 4-10 carbon atoms in their ring structure and in some embodiments have 4-7 carbon atoms in the ring structure. The term "lower alkyl" refers to alkyl groups having from 1 to 6 carbons in the chain and to cycloalkyls having from 3 to 6 carbons in the ring structure.

Moreover, the term "alkyl" (including "lower alkyl") as used throughout the specification and claims includes both "unsubstituted alkyls" and "substituted alkyls", the latter of which refers to alkyl moieties having substituents replacing a hydrogen on one or more carbons of the hydrocarbon backbone. Such substituents can include, for example, halogen, hydroxyl, alkylcarbonyloxy, arylcarbonyloxy, alkoxycarbonyloxy, aryloxycarbonyloxy, carboxylate, alkylcarbonyl, alkoxycarbonyl, aminocarbonyl, alkylthiocarbonyl, alkoxyl, phosphate, phosphonato, phosphinato, cyano, amino (including alkyl amino, dialkylamino, arylamino, diarylamino and alkylarylamino), acylamino (including alkylcarbonylamino, arylcarbonylamino, carbamoyl and ureido), amidino, imino, sulfhydryl, alkylthio, arylthio, thiocarboxylate, sulfate, sulfonato, sulfamoyl, sulfonamido, nitro, trifluoromethyl, cyano, azido, heterocyclyl, aralkyl, or an aromatic or heteroaromatic moiety. It will be understood by those skilled in the art that the moieties substituted on the hydrocarbon chain can themselves be substituted, if appropriate. Cycloalkyls can be further substituted, *e.g.*, with the substituents described above. An "aralkyl" moiety is an alkyl substituted with an aryl, *e.g.*, having 1 to 3 separate or fused rings and from 6 to about 18 carbon ring atoms, *e.g.*, phenylmethyl (benzyl).

The term "aryl" includes 5- and 6-membered single-ring aromatic groups that may include from zero to four heteroatoms, for example, unsubstituted or substituted benzene, pyrrole, furan, thiophene, imidazole, oxazole, thiazole, triazole, pyrazole, pyridine, pyrazine, pyridazine and pyrimidine and the like. Aryl groups also include polycyclic fused aromatic groups such as naphthyl, quinolyl, indolyl and the like. The aromatic ring can be substituted at one or more ring positions with such substituents, *e.g.*, as described above for alkyl groups. Suitable aryl groups include unsubstituted and substituted phenyl groups. The term "aryloxy" as used herein means an aryl group, as defined above, having an oxygen atom attached thereto.

The term "aralkoxy" as used herein means an aralkyl group, as defined above, having an oxygen atom attached thereto. Suitable aralkoxy groups have 1 to 3 separate or fused rings and from 6 to about 18 carbon ring atoms, *e.g.*, O-benzyl.

The term "amino," as used herein, refers to an unsubstituted or substituted moiety of the formula -$NR_aR_b$, in which $R_a$ and $R_b$ are each independently hydrogen, alkyl, aryl, or heterocyclyl, or $R_a$ and $R_b$, taken together with the nitrogen atom to which they are attached, form a cyclic moiety having from 3 to 8 atoms in the ring. Thus, the term

"amino" includes cyclic amino moieties such as piperidinyl or pyrrolidinyl groups, unless otherwise stated. An "amino-substituted amino group" refers to an amino group in which at least one of $R_a$ and $R_b$, is further substituted with an amino group.

The term "protecting group," as used herein, refers to chemical modification of functional groups that are well known in the field of organic synthesis. Exemplary protecting groups can vary, and are generally described in Protective Groups in Organic Synthesis [T. W. Green and P. G. M. Wuts , John Wiley & Sons, Inc, 1999].

"Hybrid", including "organic-inorganic hybrid material," includes inorganic-based structures wherein an organic functionality is integral to both the internal or "skeletal" inorganic structure as well as the hybrid material surface. The inorganic portion of the hybrid material may be, e.g., e.g., alumina, silica, titanium, cerium, or zirconium or oxides thereof, or ceramic material. "Hybrid" includes inorganic-based structures wherein an organic functionality is integral to both the internal or "skeletal" inorganic structure as well as the hybrid material surface. As noted above, exemplary hybrid materials are shown in U.S. Patent Nos. 4,017,528, 6,528,167, 6,686,035 and 7,175,913.

The term "BEH," as used herein, refers to an organic-inorganic hybrid material which is a ethylene bridged hybrid material.

The term "adsorbed group," as used herein, represents a monomer, oligimer ro polymer, crosslinked or non-crosslinked, that is non-covalently attached to the core material. In certain embodiments of the invention, wherein Z represents an adsorbed group, the group can be adsorbed onto the core material, X, the surface of the core material, X, or the surface of the stationary phase material. Examples include, but are not limited to alcohols, amines, thiols, polyamines, dedrimers, or polymers.

The term "functionalizing group" or "functionalizable group" includes organic functional groups which impart a certain chromatographic functionality to a stationary phase.

The term "terminal group," as used herein, represents a group which cannot undergo further reactions. In certain embodiments, a terminal group may be a hydrophilic terminal group. Hydrophilic terminal groups include, but are not limited to, protected or deprotected forms of an alcohol, diol, glycidyl ether, epoxy, triol, polyol, pentaerythritol, pentaerythritol ethoxylate, 1,3-dioxane-5,5-dimethanol, tris(hydroxymethyl)aminomethane, tris(hydroxymethyl)aminomethane polyglycol ether, ethylene glycol, propylene glycol, poly(ethylene glycol), poly(propylene glycol), a mono-valent, divalent, or polyvalent carbohydrate group, a multi-antennary carbohydrate, a dendrimer containing peripheral hydrophilic groups, a dendrigraph containing peripheral hydrophilic groups, or a zwitterion group.

The term "surface attachment group," as used herein, represents a group which may be reacted to covalently bond, non-covalently bond, adsorb, or otherwise attach to the core material, the surface of the core material, or the surface of the stationary phase material. In certain embodiments, the surface attachment group is attached to the surface of the core material by a siloxane bond.

The term "reducing the incidence of noise" as used herein, refers to a lowering or lessening of the amount or severity of noise obtained by a detector. Such reduction can be readily determined by one of ordinary skill in the art by comparison of a sample under the same conditions (temperature, concentration, flow rate, etc.) with a conventional SEC column such as a Tosoh TSKgel(R) SuperSW3000, 4.6x300mm, P/N 18675.

The term "reducing the incidence of ghost peaks" as used herein, refers to a lowering or lessening of the number or severity of ghost peaks obtained by a detector. Such reduction can be readily determined by one of ordinary skill in the art by comparison of a sample under the same conditions (temperature, concentration, flow rate, etc.) with a conventional SEC column such as a Tosoh TSKgel(R) SuperSW3000, 4.6x300mm, P/N 18675.

***Stationary Phase Material***

The devices and methods of the invetion utilize a stationary phase material. Such material can be composed a monolith, one or more particles, one or more spherical particles, or one or more pellicular particles.

In certain embodiments, said stationary phase material comprises particles or a monolith having a core composition and a surface composition represented by
**Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte.

Furthermore, in certain embodiments, W and Q occupy free valences of the core composition, X, or the surface of the core composition. In other embodiments of the device of the invention, W and Q are selected to form a surface composition. In other embodiments, X may be selected to form a block polymer or group of block polymers.

In aspects of the invention when the stationary phase is particulate, the particles of the particulate stationary phase material may have diameters with a mean size distribution of 0.4 - 3.0 microns; 0.5-3.0; 0.6-3.0; 0.7-3.0; 0.9-3.0 or 1.0-3.0 microns.

In other embodiments of the device of the invention, the stationary phase material comprises a monolith. In embodiments of the device of the invention wherein the stationary phase material comprises particles, the monolith of the stationary phase material exhibits the chromatographic efficiency and permeability of a particle bed packed with particles having a mean size distribution of 0.4 -3.0 microns ; 0.5-3.0; 0.6-3.0; 0.7-3.0; 0.9-3.0 or 1.0-3.0 microns.

In other embodiments of the device of the invention the stationary phase material has a pore volume of 0.8 to 1.7 $cm^3/g$; 0.9 to 1.6 $cm^3/g$; 1.0 to 1.5 $cm^3/g$' or 1.1 to 1.5 $cm^3/g$.

In certain embodiments of the stationary phase material, X is silica, titanium oxide, aliuminum oxide or an organic-inorganic hybrid core comprising an aliphatic bridged silane.

In specific embodiments, X is an organic-inorganic hybrid core comprising a aliphatic bridged silane. In certain other specific embodiments, the aliphatic group of the aliphatic bridged silane is ethylene.

In certain other embodiments, the core material, X, may be cerium oxide, zirconium oxides, or a ceramic material. In certain other embodiments, the core material, X, may have a chromatographically enhancing pore geometry (CEPG). CEPG includes the geometry, which has been found to enhance the chromatographic separation ability of the material, e.g., as distinguished from other chromatographic media in the art. For example, a geometry can be formed, selected or constructed, and various properties and/or factors can be used to determine whether the chromatographic separations ability of the material has been "enhanced", e.g., as compared to a geometry known or conventionally used in the art. Examples of these factors include high separation efficiency, longer column life and high mass transfer properties (as evidenced by, e.g., reduced band spreading and good peak shape.) These properties can be measured or observed using art-recognized techniques. For example, the chromatographically-enhancing pore geometry of the present porous inorganic/organic hybrid particles is distinguished from the prior art particles by the absence of "ink bottle" or "shell shaped" pore geometry or morphology, both of which are undesirable because they, e.g., reduce mass transfer rates, leading to lower efficiencies. Chromatographically-enhancing pore geometry is found in hybrid materials containing only a small population of micropores. A small population of micropores is achieved in hybrid materials when all pores of a diameter of about < 34Å contribute less than about 110 $m^2/g$ to the specific surface area of the material. Hybrid materials with such a low micropore surface area (MSA) give chromatographic enhancements including high separation efficiency and good mass transfer properties (as evidenced by, e.g., reduced band spreading and good peak shape). Micropore surface area (MSA) is defined as the surface area in pores with diameters less than or equal to 34Å, determined by multipoint nitrogen sorption analysis from the adsorption leg of the isotherm using the BJH method. As used herein, the acronyms "MSA" and "MPA" are used interchangeably to denote "micropore surface area".

In certain embodiments the core material, X, may be surface modified with a surface modifier having the formula $Z_a(R')_bSi\text{-}R''$, where Z = Cl, Br, I, $C_1$ - $C_5$ alkoxy, dialkylamino or trifluoromethanesulfonate; a and b are each an integer from 0 to 3 provided that a + b = 3; R' is a $C_1$ - $C_6$ straight, cyclic or branched alkyl group, and R" is a functionalizing group.

In another embodiment, the core material, X, may be surface modified by coating with a polymer.

In certain embodiments, the surface modifier is selected from the group consisting of octyltrichlorosilane, octadecyltrichlorosilane, octyldimethylchlorosilane and octadecyldimethylchlorosilane. In some embodiments, the surface modifier is selected from the group consisting of octyltrichlorosilane and octadecyltrichlorosilane. In other embodiments, the surface modifier is selected from the group consisting of an isocyanate or 1,1'-carbonyldiimidazole (particularly when the hybrid group contains a $(CH_2)_3OH$ group).

In another embodiment, the material has been surface modified by a combination of organic group and silanol group modification.

In still another embodiment, the material has been surface modified by a combination of organic group modification and coating with a polymer. In a further embodiment, the organic group comprises a chiral moiety.

In yet another embodiment, the material has been surface modified by a combination of silanol group modification and coating with a polymer.

In other embodiments, the material has been surface modified via formation of an organic covalent bond between an organic group on the materialand the modifying reagent.

In still other embodiments, the material has been surface modified by a combination of organic group modification, silanol group modification and coating with a polymer.

In another embodiment, the material has been surface modified by silanol group modification.

In certain embodiments, the surface modified layer may be porous or nonporous.

In other embodiments of the stationary phase material, Q is a hydrophilic group, a hydrophobic group or absent.

In some embodiments of the stationary phase material, wherein Q is a hydrophilic group, Q is an aliphatic

group. In other embodiments, said aliphatic group is an aliphatic diol.

In still other embodiments, Q is represented by **Formula 2**

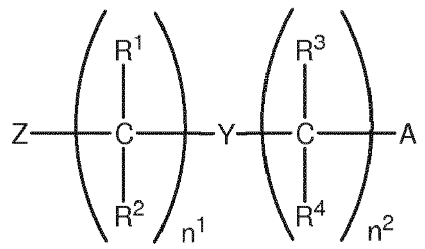

**Formula 2**

wherein

**$n^1$** an integer from 0-30;
**$n^2$** an integer from 0-30;
each occurrence of **$R^1$, $R^2$, $R^3$** and **$R^4$** independently represents hydrogen, fluoro, lower alkyl, a protected or deprotected alcohol, a zwiterion, or a group **Z;**

**Z** represents:

**a)** a surface attachment group produced by formation of covalent or non-covalent bond between the surface of the stationay phase material with a moiety of **Formula 3:**

$(B^1)_x(R^5)_y(R^6)_zSi-$ **Formula 3:**

wherein **x** is an integer from 1-3,

**y** is an integer from 0-2,
**z** is an integer from 0-2,
and **x+y+z** = 3

each occurrence of **$R^5$** and **$R^6$** independently represents methyl, ethyl, *n*-butyl, *iso*-butyl, *tert-butyl, iso*-propyl, thexyl, substituted or unsubstituted aryl, cyclic alkyl, branched alkyl, lower alkyl, a protected or deprotected alcohol, or a zwiterion group;
**$B^1$** represents $-OR^7$, $-NR^{7'}R^{7''}$, $-OSO_2CF_3$, or -Cl; where each of **$R^7$, $R^{7'}$** and **$R^{7''}$** represents hydrogen, methyl, ethyl, n-butyl, *iso*-butyl, *tert-butyl, iso*-propyl, thexyl, phenyl, branched alkyl or lower alkyl;

**b)** a direct attachment to a surface hybrid group of X through a direct carbon-carbon bond formation or through a heteroatom, ester, ether, thioether, amine, amide, imide, urea, carbonate, carbamate, heterocycle, triazole, or urethane linkage; or

**c)** an adsorbed group that is not covalently attached to the surface of the stationary phase material;

**d)** a surface attachment group produced by formation of a covalent bond between the surface of the stationary phase material, when W is hydrogen, by reaction with a vinyl or alkynyl group;

**Y** represents a direct bond; a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrates, a dendrimer or dendrigraphs, or a zwitterion group; and

**A** represents

i.) a hydrophilic terminal group;

ii.) hydrogen, fluoro, fluoroalkyl, lower alkyl, or group **Z;** or
iii.) a functionalizable group.

In certain embodiments of the device of the invention, wherein Q is an aliphatic diol of Formula 2, $\mathbf{n^1}$ an integer from 2-18, or from 2-6. In other embodiments of the device of the invention, wherein Q is an aliphatic diol of Formula 2, $\mathbf{n^2}$ an integer from 0-18 or from 0-6. In still other embodiments of the device of the invention, wherein Q is an aliphatic diol of Formula 2, $\mathbf{n^1}$ an integer from 2-18 and $\mathbf{n^2}$ an integer from 0-18, $\mathbf{n^1}$ an integer from 2-6 and wherein $\mathbf{n^2}$ an integer from 0-18, $\mathbf{n^1}$ an integer from 2-18 and $\mathbf{n^2}$ an integer from 0-6, or $\mathbf{n^1}$ an integer from 2-6 and and $\mathbf{n^2}$ an integer from 0-6.
In yet other embodiments of the stationary phase material, wherein Q is an aliphatic diol of Formula 2, **A** represents i) a hydrophilic terminal group and said hydrophilic terminal group is a protected or deprotected forms of an alcohol, diol, glycidyl ether, epoxy, triol, polyol, pentaerythritol, pentaerythritol ethoxylate, 1,3-dioxane-5,5-dimethanol, tris(hydroxymethyl)aminomethane, tris(hydroxymethyl)aminomethane polyglycol ether, ethylene glycol, propylene glycol, poly(ethylene glycol), poly(propylene glycol), a mono-valent, divalent, or polyvalent carbohydrate group, a multi-antennary carbohydrate, a dendrimer containing peripheral hydrophilic groups, a dendrigraph containing peripheral hydrophilic groups, or a zwitterion group.
In still other embodiments of the stationary phase material, wherein Q is an aliphatic diol of Formula 2, **A** represents ii.) hydrogen, fluoro, methyl, ethyl, n-butyl, t-butyl, i-propyl, lower alkyl, or group **Z.**
In still yet other embodiments of the stationary phase material, wherein Q is an aliphatic diol of Formula 2, **A** represents iii.) a functionalizable group, and said functionalizable group is a protected or deprotected form of an amine, alcohol, silane, alkene, thiol, azide, or alkyne. In some embodiments, said functionalizable group can give rise to a new surface group in a subsequent reaction step wherein said reaction step is coupling, metathesis, radical addition, hydrosilylation, condensation, click, or polymerization.
In still other embodiments, the group Q can be a surface modifier. Non-limiting examples of surface modifiers that can be employed for these materials include:
**A.)** Silanes that result in a hydrophollic surface modification

$$(B^1)_x(R^5)_y(R^6)_zSi\left(CH_2\right)_{n^1}A$$

Hydrophillic Surface

| Option | $B^1$ | $R^5$ | $R^6$ | x/y/z | $n^1$ |
|---|---|---|---|---|---|
| 1 | chloro, methoxy, or ethoxy | -- | -- | 3/0/0 | 3 |
| 2 | chloro, methoxy, or ethoxy | methyl, ethyl, n-propyl, i-propyl, or t-butyl | -- | 2/1/0 | 3 |
| 3 | chloro, methoxy, or ethoxy | methyl, ethyl, n-propyl, i-propyl, or t-butyl | -- | 1/2/0 | 3 |
| 4 | chloro, methoxy, or ethoxy | methyl, ethyl, n-propyl, i-propyl, or t-butyl | methyl, ethyl, n-propyl, i-propyl, or t-butyl | 1/1/1 | 3 |

Where A is selected from the following:

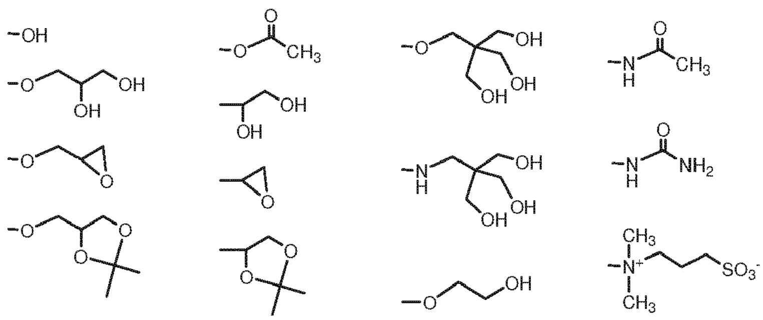

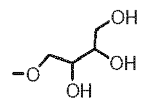 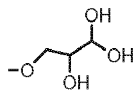 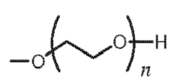 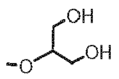

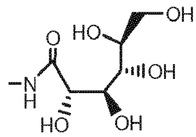 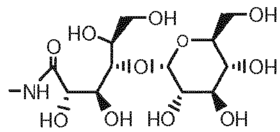 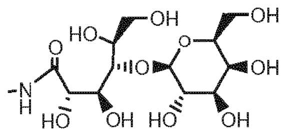

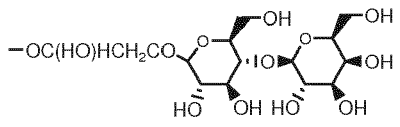 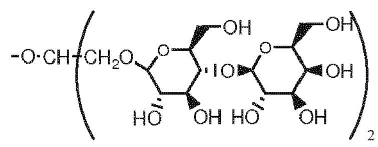

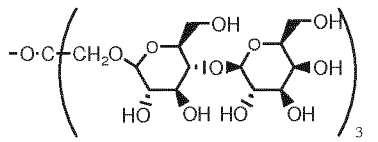

$-O-CH\{CH_2OCH(CH_2OH)_2\}_2$

$-O-CH\{CH_2OCH[CH_2OCH(CH_2OH)_2]_2\}_2$

or

**B)** silanes that result in a hydrophobic or a mixed hydrophollic/hydrophobic surface modification

$$(B^1)_x(R^5)_y(R^6)_zSi\left(CH_2\right)_{n^1}A$$

Hydrophobic Surface

| Option | $B^1$ | $R^5$ | $R^6$ | x/y/z | $n^1$ |
|---|---|---|---|---|---|
| 1 | chloro, methoxy, or ethoxy | -- | -- | 3/0/0 | 1-18 |
| 2 | chloro, methoxy, or ethoxy | methyl, ethyl, n-propyl, i-propyl, or t-butyl | -- | 2/1/0 | 3-18 |
| 3 | chloro, methoxy, or ethoxy | methyl, ethyl, n-propyl, i-propyl, or t-butyl | -- | 1/2/0 | 1-3-18 |
| 4 | chloro, methoxy, or ethoxy | methyl, ethyl, n-propyl, i-propyl, or t-butyl | methyl, ethyl, n-propyl, i-propyl, or t-butyl | 1/1/1 | 3-18 |

Where A is selected from the following; H, phenyl, $NHC(O)NHR^8$, $NHC(O)R^8$, $OC(O)NHR^8$, $OC(O)OR^8$, or triazole-$R^8$, where $R^8$ is octadecyl, dodecyl, decyl, octyl, hexyl, n-butyl, t-butyl, n-propyl, i-propyl, phenyl, benzyl, phenethyl, phenylethyl, phenylpropyl, diphenylethyl, biphenylyl.

In certain embodiments of the device of the invention, Z represents an attachment to a surface organofunctional hybrid group through a direct carbon-carbon bond formation or through a heteroatom, ester, ether, thioether, amine, amide, imide, urea, carbonate, carbamate, heterocycle, triazole, or urethane linkage.

In other embodiments, Z represents an adsorbed, surface group that is not covalently attached to the surface of the material. This surface group can be a cross-linked polymer, or other adsorbed surface group. Examples include, but are not limited to alcohols, amines, thiols, polyamines, dedrimers, or polymers.

### *Housing, Detectors and Sample Injection Devices*

In some embodiments, of the device of the invention, the housing is equipped with one or more frits to contain the stationary phase material. In embodiments in which the stationary phase material is monolithic, the housing may be

used without the inclusion of one or more frits.

In other embodiments, the housing is equipped with one or more fittings capable of placing the device in fluid communication with a sample injection device, a detector or both.

Examples of detectors used for size-exclusion chromatography are, without limitation, refractive index detectors, UV detectors, light-scattering detectors and mass spectrometers.

Examples of injection devices include, without being limited thereto, on-column injectors, PTV injectors, gas sampling valves, purge and trap systems, multi injectors, split injectors, splitless injectors, and split/splitless injectors

***Methods of Performing Size Exclusion Chromatography***

In another aspect, the invention provides a method of performing size exclusion chromatography comprising the steps of

A.) providing a housing having at least one wall defining a chamber having an entrance and an exit; and a stationary phase material comprising a core and surface composition held in said chamber;
wherein said particulate stationary phase comprises particles which have a core composition and a surface composition represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte;

B.) loading a sample on said chamber at a column inlet pressureof greater than 1,000 psi to flow the sample through said stationary phase media; and

C.) separating the sample into one or more compositions by size.

In certain embodiments of the method of the invention, column inlet pressure is greater than 2,000 psi; greater than 3,000 psi; greater than 4,000 psi; greater than 5,000 psi; greater than 6,000 psi; greater than 7,000 psi; greater than 8,000 psi; greater than 9,000 psi; greater than 10,000 psi; greater than 15,000 psi; or greater than 20,000 psi. In still other embodiments column inlet pressure is from about 1,000 psi to about 20,000 psi; from about 5,000 psi to about 20,000 psi; from about 7,000 psi to about 20,000 psi; from about 10,000 psi to about 20,000 psi; about 1,000 psi to about 15,000 psi; or from about 5,000 to about 15,000 psi.

In another embodiment of the method of the invention, the method further comprises the step of
D.) isolating the one or more compositions.

In yet another embodiment of the method of the invention, the method further comprises the step of
E.) detecting the one or more compositions.

In still another embodiment of the method of the invention, the method further comprises the step of

D.) isolating the one or more compositions; and
E.) detecting the one or more compositions.

In certain embodiments of the method of the invention, said sample is a biopolymer. In embodiments wherein the sample is a biopolymer, Q may be a hydrophilic. In some embodiments, Q is an aliphatic group. In other embodiments, said aliphatic group is an aliphatic diol. In still other embodiments, said aliphatic diol is represented by **Formula 2**

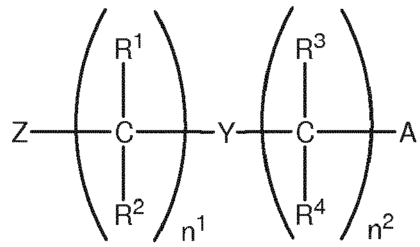

**Formula 2**

wherein

**$n^1$** an integer from 0-30;
**$n^2$** an integer from 0-30;
each occurrence of **$R^1$, $R^2$, $R^3$** and **$R^4$** independently represents hydrogen, fluoro, lower alkyl, a protected or deprotected alcohol, a zwiterion, or a group **Z;**

**Z** represents:

**a)** a surface attachment group produced by formation of covalent or non-covalent bond between the surface of the stationay phase material with a moiety of **Formula 3:**

$(B^1)_x(R^5)_y(R^6)_zSi$- **Formula 3:**

wherein **x** is an integer from 1-3,

**y** is an integer from 0-2,
**z** is an integer from 0-2,
and **x+y+z** = 3

each occurrence of **$R^5$** and **$R^6$** independently represents methyl, ethyl, *n*-butyl, *iso*-butyl, *tert*-butyl, *iso*-propyl, thexyl, substituted or unsubstituted aryl, cyclic alkyl, branched alkyl, lower alkyl, a protected or deprotected alcohol, or a zwiterion group;
**$B^1$** represents $-OR^7$, $-NR^{7'}R^{7''}$, $-OSO_2CF_3$, or -Cl; where each of **$R^7$, $R^{7'}$** and **$R^{7''}$** represents hydrogen, methyl, ethyl, *n*-butyl, *iso*-butyl, *tert*-butyl, *iso*-propyl, thexyl, phenyl, branched alkyl or lower alkyl;

**b)** a direct attachment to a surface hybrid group of X through a direct carbon-carbon bond formation or through a heteroatom, ester, ether, thioether, amine, amide, imide, urea, carbonate, carbamate, heterocycle, triazole, or urethane linkage; or

**c)** an adsorbed group that is not covalently attached to the surface of the stationary phase material;

**d)** a surface attachment group produced by formation of a covalent bond between the surface of the stationary phase material, when W is hydrogen, by reaction with a vinyl or alkynyl group;

**Y** represents a direct bond; a heteroatom linkage; an ester linkage; an ether linkage; an thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrates,a dendrimer or dendrigraphs, or a zwitterion group; and

**A** represents

i.) a hydrophilic terminal group;
ii.) hydrogen, fluoro, methyl, ethyl, n-butyl, t-butyl, i-propyl, lower alkyl, or group **Z;** or
iii.) a functionalizable group.

In other embodiments of the method of the invention, the sample is a synthetic organic polymer. In embodiments wherein the sample is a synthetic organic polymer, Q may be a hydrophobic.

In yet another aspect, the invention provides a method of reducing the incidence of noise obtained by a light scattering detector during size exclusion chromatography exclusion chromatography comprising the steps of

A.) providing a housing having at least one wall defining a chamber having an entrance and an exit; and a stationary phase material comprising a core and surface composition held in said chamber;
wherein said stationary phase material comprises particles or a monolith represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte.

B.) loading a sample on said stationary material said chamber at a column inlet pressureof greater than 1,000 psi and flowing the sample through said stationary phase media;

C.) separating the sample into one or more compositions by size; and

D.) detecting the one or more compositions using a light scattering detector

In still another aspect, the invention provides a method of reducing the incidence of ghost peaks obtained by a light scattering detector during size exclusion chromatography exclusion chromatography comprising the steps of

A.) providing a housing having at least one wall defining a chamber having an entrance and an exit; and a stationary phase material comprising a core and surface composition held in said chamber;
wherein said stationary phase material comprises particles or a monolith represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte

B.) loading a sample on said stationary material said chamber at a column inlet pressureof greater than 1,000 psi and flowing the sample through said stationary phase media;

C.) separating the sample into one or more compositions by size; and

D.) detecting the one or more compositions using a light scattering detector.

In specific embodiments, the reduction in noise or ghost peaks is measured using a standard conventional SEC column. In other embodiments, the reduction in noise or ghosts peaks is measured using an standard, conventional SEC column without pre-washing the column. In any event, the reduction in noise or ghosts peaks is measured using a common sample under substantially equivalent conditions (temperature, inlet pressure, detector, column dimensions, etc.) as will be known to one of ordinary skill in the art.

These and other features and advantages of the present invention will be apparent to those skilled in the art upon viewing the drawing described below and reading the detailed description that follows.

## Examples

The present invention may be further illustrated by the following non-limiting examples describing the chromatographic devices and methods.

### *Materials*

All reagents were used as received unless otherwise noted. Those skilled in the art will recognize that equivalents of the following supplies and suppliers exist and, as such, the suppliers listed below are not to be construed as limiting.

### *Characterization*

Those skilled in the art will recognize that equivalents of the following instruments and suppliers exist and, as such, the instruments listed below are not to be construed as limiting.

The %C values were measured by combustion analysis (CE-440 Elemental Analyzer; Exeter Analytical Inc., North Chelmsford, MA) or by Coulometric Carbon Analyzer (modules CM5300, CM5014, UIC Inc., Joliet, IL). Bromine and Chlorine content were determined by flask combustion followed by ion chromatography (Atlantic Microlab, Norcross, GA). The specific surface areas (SSA), specific pore volumes (SPV) and the average pore diameters (APD) of these materials were measured using the multi-point $N_2$ sorption method (Micromeritics ASAP 2400; Micromeritics Instruments Inc., Norcross, GA). The SSA was calculated using the BET method, the SPV was the single point value determined for $P/P_0 > 0.98$ and the APD was calculated from the desorption leg of the isotherm using the BJH method. The micropore surface area (MSA) was determined as the cumulative adsorption pore diameter data for pores < 34 Å subtracted from the specific surface area (SSA). The median mesopore diameter (MMPD) and mesopore pore volume (MPV) were measured by Mercury Porosimetry (Micromeritics AutoPore II 9220 or AutoPore IV, Micromeritics, Norcross, GA). Skeletal densities were measured using a Micromeritics AccuPyc 1330 Helium Pycnometer (V2.04N, Norcross, GA). Particle sizes were measured using a Beckman Coulter Multisizer 3 analyzer (30 μm aperture, 70,000 counts; Miami, FL). The particle diameter ($dp_{50}$) was measured as the 50% cumulative diameter of the volume based particle size distribution. The width of the distribution was measured as the 90% cumulative volume diameter divided by the 10% cumulative volume diameter (denoted 90/10 ratio). Viscosity was determined for these materials using a Brookfield digital viscometer Model DV-II (Middleboro, MA). Measurements of pH were made with a Oakton pH100 Series meter (Cole-Palmer, Vernon Hills, Illinois) and were calibrated using Orion (Thermo Electron, Beverly, MA) pH buffered standards at ambient temperature immediately before use. Titrations were performed using a Metrohm 716 DMS Titrino autotitrator (Metrohm, Hersau, Switzerland), and are reported as milliequivalents per gram (mequiv/g). Multinuclear ($^{13}C$, $^{29}Si$) CP-MAS NMR spectra were obtained using a Bruker Instruments Avance-300 spectrometer (7 mm double broadband probe). The spinning speed was typically 5.0-6.5 kHz, recycle delay was 5 sec. and the cross-polarization contact time was 6 msec. Reported $^{13}C$ and $^{29}Si$ CP-MAS NMR spectral shifts were recorded relative to tetramethylsilane using the external standards adamantane ($^{13}C$ CP-MAS NMR, □38.55) and hexamethylcyclotrisiloxane ($^{29}Si$ CP-MAS NMR, □ -9.62). Populations of different silicon environments were evaluated by spectral deconvolution using DMFit software. [Massiot, D.; Fayon, F.; Capron, M.; King, I.; Le Calvé, S.; Alonso, B.; Durand, J.-O.; Bujoli, B.; Gan, Z.; Hoatson, G. Magn. Reson. Chem. 2002, 40, 70-76]

## EXAMPLE 1

An aqueous mixture of Triton® X-100 (X100, Dow Chemical, Midland, MI), deionized water and ethanol (EtOH; anhydrous, J.T.Baker, Phillipsburgh, NJ) was heated at 55°C for 0.5 h. In a separate flask, an oil phase solution was prepared by mixing a POS prepared as detailed in Example 1h from US 6,686,035 B2 for 0.5 hours with toluene (Tol; HPLC grade, J.T. Baker, Phillipsburgh, NJ). Under rapid agitation, the oil phase solution was added into the EtOH/water/X100 mixture and was emulsified in the aqueous phase using a rotor/stator mixer (model 100 L, Charles Ross & Son Co., Hauppauge, NY). Thereafter, 30% ammonium hydroxide ($NH_4OH$; J.T. Baker, Phillipsburgh, NJ) was added into the emulsion. Suspended in the solution, the gelled product was transferred to a flask and stirred at 55 °C for 18h. The resulting spherical, porous, hybrid inorganic/organic particles of the formula $\{(O_{1.5}SiCH_2CH_2SiO_{1.5})(SiO_2)_4\}$ were collected on 0.5 μm filtration paper and washed successively with water and methanol (HPLC grade, J.T. Baker, Phillipsburgh, NJ). The products were then dried in a vacuum oven at 80°C overnight. Specific amounts of starting materials used to prepare these products are listed in Table 3. The %C values, specific surface areas (SSA), specific pore volumes (SPV) and average pore diameters (APD) of these materials are listed in Table 1. Products prepared by this approach were highly spherical free flowing particles, as confirmed by SEM.

The increase in mass ratio of toluene/POS yielded an increase in SPV from 1.07-1.68 $cm^3/g$. The need for increased particle porosity is well known in the field of SEC separations.

**TABLE 1**

| Product | POS (g) | Tol (g) | Water (Kg) | Ethanol (g) | X100 (g) | $NH_4OH$ (mL) | Mass Ratio Toluene/POS | %C | SSA ($m^2$/g) | SPV ($cm^3$/g) | APD (Å) |
|---|---|---|---|---|---|---|---|---|---|---|---|
| 1a | 290 | 162 | 1.4 | 295 | 28 | 220 | 0.56 | 7.35 | 616 | 1.50 | 94 |
| 1b | 290 | 189 | 1.4 | 295 | 28 | 220 | 0.65 | 7.47 | 597 | 1.68 | 110 |
| 1c | 754 | 270 | 3.64 | 766 | 73 | 572 | 0.36 | 6.72 | 579 | 1.10 | 71 |
| Id | 754 | 270 | 3.64 | 766 | 73 | 572 | 0.36 | 7.04 | 594 | 1.07 | 67 |
| 1e | 754 | 270 | 3.64 | 766 | 73 | 572 | 0.36 | 7.32 | 593 | 1.17 | 79 |
| 1f | 754 | 270 | 3.64 | 766 | 73 | 572 | 0.36 | 6.92 | 632 | 1.22 | 74 |
| 1g | 754 | 270 | 3.64 | 766 | 73 | 572 | 0.36 | 6.64 | 621 | 1.22 | 73 |
| 1h | 754 | 270 | 3.64 | 766 | 73 | 572 | 0.36 | 7.18 | 619 | 1.10 | 64 |
| 1i | 754 | 270 | 3.64 | 766 | 73 | 572 | 0.36 | 7.52 | 610 | 1.19 | 73 |
| 1j | 38,630 | 13,910 | 186.5 | 41,028 | 13,910 | 29,300 | 0.36 | 7.79 | 581 | 1.36 | 92 |

## EXAMPLE 2

Although the spherical morphology and SPV of products prepared in Examples 1 are comparable to many high quality SEC packing materials, the APD for most of these products is lower than most commercial packing materials designed for larger molecule separations (*e.g.*, 100-450 Å). In order to increase the APD within a more useful range for SEC of larger molecules, this example illustrates the development of the use of hydrothermal treatments for these materials.

Porous particles of Examples 1 were sized to generate a 1.5-3.0 micron particle size distributions. Any number of well known sizing techniques may be used. Such sizing techniques are described, for example, in W. Gerhartz, et al. (editors) Ullmann's Encyclopedia of Industrial Chemistry, 5th edition, Volume B2: Unit Operations I, VCH Verlagsgesellschaft mbH, (Weinheim , Fed. Rep. Germ. 1988). These particles were mixed with an aqueous solution of either tris(hydroxymethyl)aminomethane (TRIS; Aldrich, Milwaukee, WI) or triethylamine (TEA; Aldrich, Milwaukee, WI), yielding a slurry. The pH of the slurry was adjusted as necessary by adding dilute acetic acid. The resultant suspension was then transferred to a stainless steel autoclave and heated to between 120 -155 °C for 20-41 hours. Reactions 2a and 2c were performed in glassware. After the autoclave cooled to room temperature the product was isolated on 0.5 μm filtration paper and washed repeatedly using water and methanol (HPLC grade, J.T. Baker, Phillipsburgh, NJ) and then dried at 80 °C under vacuum for 20 hours. Specific hydrothermal conditions are listed in Table 2 (mL of base solution/gram of particle, concentration and pH of initial base solutions, reaction temperature, and reaction hold time). The specific surface areas (SSA), specific pore volumes (SPV), average pore diameters (APD), micropore surface area (MSA) and the %C of these materials are listed in Table 2.

**TABLE 2**

| Product | Precursor | Solid Mass (g) | Solvent Amount (mL/g) | Base | Conc. (Molarity) | pH | Temp (°C) | %C | SSA ($m^2/g$) | SPV ($cm^3/g$) | APD (Å) | $dp_{50}$ vol% (μm) | $^{90}/_{10}$ ratio | MPV ($cm^3/g$) | MMPD (Å) |
|---|---|---|---|---|---|---|---|---|---|---|---|---|---|---|---|
| 2a | 1j | 15 | 5 | TRIS | 0.3 | 9.8 | 95 | 6.50 | 400 | 1.29 | 114 | 2.83 | 1.56 | 1.19 | 80 |
| 2b | 1j | 15 | 5 | TRIS | 0.3 | 9.8 | 120 | 6.42 | 289 | 1.29 | 151 | 2.27 | 1.50 | 1.19 | 93 |
| 2c | 1j | 30 | 5 | TEA | 0.5 | 12.1 | 80 | 9.15 | 412 | 1.24 | 109 | 2.35 | 1.48 | 1.08 | 95 |
| 2d | 1a | 10 | 10 | TRIS | 0.3 | 9.8 | 145 | 6.38 | 223 | 1.42 | 213 | 2.79 | 1.52 | 1.28 | 131 |
| 2e | 1b | 10 | 10 | TRIS | 0.3 | 9.8 | 152 | 6.35 | 210 | 1.64 | 253 | 2.75 | 1.47 | 1.50 | 142 |
| 2f | 1a | 10 | 10 | TRIS | 0.3 | 9.8 | 160 | 6.39 | 188 | 1.40 | 248 | 2.80 | 1.51 | 1.28 | 169 |
| 2g | 1b | 10 | 10 | TRIS | 0.3 | 9.8 | 160 | 6.36 | 189 | 1.63 | 288 | 2.73 | 1.47 | 1.52 | 162 |
| 2h | 1c, Id | 10 | 10 | TRIS | 0.3 | 9.7 | 170 | 6.36 | 153 | 1.06 | 236 | 2.90 | 1.53 | 1.03 | 195 |
| 2i | 1c, Id | 10 | 10 | TRIS | 0.3 | 9.7 | 200 | 6.47 | 94 | 1.02 | 366 | 3.03 | 1.57 | 0.95 | 307 |
| 2j | 1a | 10 | 10 | TRIS | 0.3 | 9.8 | 200 | 6.45 | 115 | 1.42 | 423 | 2.71 | 1.52 | 1.33 | 315 |
| 2k | 1b | 10 | 10 | TRIS | 0.3 | 9.8 | 200 | 6.39 | 117 | 1.63 | 463 | 2.67 | 1.48 | 1.51 | 289 |
| 2l | 1c, Id | 30 | 10 | TRIS | 0.3 | 9.8 | 200 | 6.44 | 107 | 1.06 | 362 | 2.88 | 1.55 | 0.98 | 282 |
| 2m | 1a | 10 | 10 | TRIS | 0.3 | 9.8 | 200 | 6.42 | 116 | 1.43 | 433 | 2.71 | 1.53 | 1.28 | 317 |
| 2n | 1b | 12 | 10 | TRIS | 0.3 | 9.7 | 200 | 6.43 | 120 | 1.65 | 469 | 2.69 | 1.55 | 1.57 | 275 |
| 2o | 1j | 100 | 10 | TRIS | 0.3 | 9.8 | 147 | 6.37 | 214 | 1.28 | 204 | 1.46 | 1.52 | | |
| 2p | 1j | 100 | 10 | TRIS | 0.3 | 9.8 | 147 | 6.25 | 216 | 1.29 | 205 | 1.50 | 1.50 | | |
| 2q | 1c, Id | 15.0 | 5 | TEA | 1.0 | 11.6 | 205 | 6.88 | 65 | 1.05 | 610 | 2.79 | 1.56 | 1.00 | 439 |
| 2r | 1e, 1f | 60 | 10 | TRIS | 0.3 | 9.7 | 198 | 6.47 | 108 | 1.13 | 365 | 1.57 | 1.74 | 1.05 | 276 |
| 2s | 1e, 1f | 50 | 10 | TRIS | 0.3 | 9.4 | 200 | 6.50 | 108 | 1.12 | 391 | 1.54 | 1.73 | 0.99 | 282 |
| 2t | 1j | 30 | 5 | TRIS | 0.3 | 10.7 | 109 | 6.48 | 339 | 1.30 | 133 | 2.15 | 1.42 | | |
| 2u | 1j | 50 | 5 | TRIS | 0.3 | 10.6 | 100 | 6.64 | 388 | 1.26 | 115 | 2.26 | 1.45 | | |
| 2v | 1j | 50 | 5 | TRIS | 0.3 | 10.1 | 120 | 6.49 | 300 | 1.27 | 147 | 2.20 | 1.45 | | |
| 2w | 1j | 50 | 5 | TRIS | 0.3 | 9.9 | 109 | 6.52 | 343 | 1.27 | 129 | 2.23 | 1.45 | | |
| 2x | 1j | 50 | 5 | TRIS | 0.3 | 10.0 | 109 | 6.44 | 346 | 1.24 | 128 | 2.06 | 1.39 | | |

(continued)

| Product | Precursor | Solid Mass (g) | Solvent Amount (mL/g) | Base | Conc. (Molarity) | pH | Temp (°C) | %C | SSA ($m^2/g$) | SPV ($cm^3/g$) | APD (Å) | $dp_{50}$ vol% (μm) | $^{90}/_{10}$ ratio | MPV ($cm^3/g$) | MMPD (Å) |
|---|---|---|---|---|---|---|---|---|---|---|---|---|---|---|---|
| 2y | 1j | 15 | 10 | TEA | 0.5 | 12.0 | 186 | 6.87 | 79 | 1.17 | 555 | 2.06 | 1.51 | 1.18 | 453 |
| 2z | 1j | 60 | 5 | TEA | 0.5 | 11.6 | 186 | 6.92 | 83 | 1.25 | 518 | 2.34 | 1.57 | 1.18 | 419 |
| 2aa | 1j | 10 | 10 | TEA | 0.5 | 11.6 | 186 | 6.7 | 76 | 1.05 | 596 | 2.34 | 1.61 | 1.19 | 472 |
| 2ab | 1j | 10 | 20 | TEA | 0.5 | 11.6 | 186 | 7.07 | 82 | 1.20 | 580 | 2.37 | 1.59 | 1.23 | 454 |
| 2ac | 1j | 100 | 10 | TEA | 0.5 | 11.8 | 186 | 6.62 | 104 | 1.27 | 396 | 1.89 | 1.40 | 1.19 | 334 |
| 2ad | 1j | 15 | 10 | TEA | 0.5 | 11.9 | 186 | 6.88 | 78 | 1.20 | 573 | 1.89 | 1.45 | 1.19 | 456 |
| 2ae | 1j | 2 | 100 | TEA | 0.5 | 11.9 | 186 | 7.37 | 86 | 1.09 | 505 | 2.23 | 1.63 | 1.50 | 433 |
| 2af | 1j | 20 | 5 | TEA | 0.5 | 11.8 | 186 | 6.73 | 83 | 1.15 | 544 | 1.88 | 1.44 | 1.12 | 418 |
| 2ag | 1j | 30 | 10 | TEA | 0.5 | 11.8 | 186 | 6.85 | 80 | 1.18 | 574 | 1.89 | 1.44 | 1.09 | 449 |
| 2ah | 1j | 20 | 17 | TEA | 0.5 | 12.0 | 186 | 7.02 | 79 | 1.23 | 566 | 2.33 | 1.58 | 1.23 | 445 |
| 2ai | 1j | 30 | 10 | TEA | 0.5 | 11.8 | 186 | 6.78 | 81 | 1.22 | 559 | 1.98 | 1.53 | 1.17 | 440 |
| 2aj | 1j | 85 | 10 | TEA | 0.5 | 11.9 | 186 | 6.52 | 110 | 1.23 | 423 | 1.91 | 1.41 | 1.13 | 308 |
| 2ak | 1j | 85 | 10 | TEA | 0.5 | 11.7 | 186 | 6.88 | 81 | 1.20 | 546 | 1.81 | 1.30 | 1.15 | 436 |
| 2al | 1j | 110 | 10 | TEA | 0.5 | 11.6 | 186 | 6.75 | 80 | 1.13 | 559 | 1.47 | 1.46 | 1.05 | 430 |
| 2am | 1j | 30 | 5 | TEA | 0.8 | 12.1 | 186 | 6.84 | 67 | 0.82 | 607 | 1.88 | 1.47 | 1.16 | 529 |
| 2an | 1j | 20 | 10 | TEA | 0.8 | 11.9 | 186 | 6.75 | 68 | 1.04 | 607 | 1.89 | 1.47 | 1.14 | 522 |
| 2ao | 1j | 84 | 5 | TRIS | 0.3 | 9.6 | 147 | 6.55 | 216 | 1.33 | 220 | 1.51 | 1.99 | | |
| 2ap | 1j | 16 | 5 | TRIS | 0.3 | 10.1 | 147 | 6.42 | 198 | 1.19 | 217 | 2.25 | 1.52 | | |
| 2aq | 1j | 60 | 5 | TRIS | 0.3 | 10.7 | 147 | 6.85 | 204 | 1.29 | 212 | 2.65 | 1.87 | | |
| 2ar | 1j | 80 | 5 | TRIS | 0.3 | 9.8 | 100 | 6.55 | 392 | 1.27 | 115 | 1.99 | 1.25 | | |

**EXAMPLE** 3

Porous particles prepared according to Examples 2 were dispersed in a 1 molar hydrochloric acid solution (Aldrich, Milwaukee, WI) for 20 h at 98°C. After the acid treatment was completed, the particles were washed with water to a neutral pH, followed by acetone (HPLC grade, J.T. Baker, Phillipsburgh, N.J.). Particles could be further treated by sedimentation in acetone to remove sub-micron fines. The particles were then dried at 80°C under vacuum for 16 h. Specific characterization data for these materials are listed in Table 3.

**TABLE 3**

| Product | Precursor | %C | SSA ($m^2/g$) | SPV ($cm^3/g$) | APD (Å) | $dp_{50}$ vol% ($\mu m$) | $^{90}/_{10}$ ratio | MPV ($cm^3/g$) | MMPD (Å) |
|---|---|---|---|---|---|---|---|---|---|
| 3a | 2i,2l | 6.41 | 102 | 1.11 | 357 | 2.74 | 1.57 | | |
| 3b | 2q | 6.81 | 68 | -- | - | 2.90 | 1.49 | 1.01 | 421 |
| 3c | 2o | 7.01 | 207 | 1.16 | 193 | 1.55 | 1.66 | | |
| 3d | 2o | 6.34 | 204 | 1.26 | 213 | 2.34 | 1.88 | | |
| 3e | 2o | 6.31 | 211 | 1.28 | 207 | 2.20 | 2.32 | | |
| 3f | 2o | 6.40 | 217 | 1.30 | 201 | 1.99 | 1.33 | | |
| 3g | 2o | 6.50 | 215 | 1.28 | 201 | 1.47 | 1.48 | | |
| 3h | 2p | 6.46 | 215 | 1.29 | 201 | 1.53 | 1.48 | | |
| 3i | 2p | 6.40 | 209 | 1.29 | 214 | 1.52 | 1.53 | | |
| 3j | 2p | 6.54 | 214 | 1.29 | 207 | 1.52 | 1.50 | | |
| 3k | 2p | 6.57 | 214 | 1.29 | 205 | 1.5 | 1.55 | | |
| 3l | 2p | 6.61 | 211 | 1.28 | 212 | 1.5 | 1.54 | | |
| 3m | 2r | 6.54 | 112 | 1.12 | 348 | 1.59 | 1.96 | | |
| 3n | 2s | 6.42 | 107 | 1.09 | 373 | 1.61 | 1.83 | 1.00 | 279 |
| 3o | 2d | 6.38 | 225 | 1.42 | 213 | 2.78 | 1.51 | | |
| 3p | 2e | 6.37 | 209 | 1.63 | 259 | 2.48 | 2.01 | | |
| 3q | 2ao | 6.56 | 217 | 1.35 | 214 | 1.52 | 2.01 | | |
| 3r | 2ap | 6.36 | 214 | 1.29 | 215 | 2.24 | 1.48 | | |
| 3s | 2aq | 6.54 | 208 | 1.29 | 217 | 2.28 | 1.66 | | |
| 3t | 2u | 6.71 | 398 | 1.28 | 117 | 2.28 | 1.47 | | |
| 3u | 2v | 6.57 | 307 | 1.29 | 151 | 2.20 | 1.43 | | |
| 3v | 2w | 6.62 | 350 | 1.29 | 132 | 2.20 | 1.43 | | |
| 3w | 2x | 6.30 | 360 | 1.28 | 126 | 2.06 | 1.38 | | |
| 3x | 2ar | 7.11 | 400 | 1.29 | 116 | 1.99 | 1.24 | | |
| 3y | 2z | 6.79 | 85 | 1.24 | 565 | 2.36 | 1.56 | 1.17 | 418 |
| 3z | 2ag, 2ai | 6.77 | 80 | 1.18 | 581 | 1.89 | 1.43 | 1.12 | 438 |
| 3aa | 2al | 6.74 | 82 | 1.16 | 558 | 1.47 | 1.48 | 1.10 | 432 |
| 3ab | 2ak | 6.80 | 81 | 1.20 | 552 | 1.81 | 1.29 | 1.18 | 435 |

**EXAMPLE 4**

Porous particles prepared according to Examples 2 were dispersed in a solution of glycidoxypropyltrimethoxysilane (GLYMO, Aldrich, Milwaukee, WI) in a 20 mM acetate buffer (pH 5.5, prepared using acetic acid and sodium

acetate, J.T. Baker) that had been premixed at 70 °C for 60 minutes. The mixture was held at 70 °C for 20 hours. The reaction was then cooled and the product was filtered and washed successively with water and methanol (J.T. Baker). The product was then dried at 80 °C under reduced pressure for 16 hours. Reaction data is listed in Table 4. Surface coverages of 5.72 -6.09 μmol/$m^2$ were determined by the difference in particle %C before and after the surface modification as measured by elemental analysis. Analysis of these materials by $^{13}C$ CP-MAS NMR spectroscopy indicates a mixture of epoxy and diol groups are present for these materials.

**TABLE 4**

| Product | Precursor | Hybrid (g) | GLYMO (g) | Dilution (mL/g) | %C | Surface Coverage (μmol/$m^2$) |
|---|---|---|---|---|---|---|
| 4a | 3c | 38.0 | 18.59 | 4 | 12.99 | 5.72 |
| 4b | 3d | 2.5 | 1.22 | 8 | 12.65 | 6.06 |
| 4c | 3e | 24.5 | 12.28 | 4 | 12.85 | 6.09 |

**EXAMPLE** 5

Porous particles prepared according to Examples 2 were dispersed in a solution of glycidoxypropyltrimethoxysilane (GLYMO, Aldrich, Milwaukee, WI) in an acetate buffer (20 mM, pH 5.5, 5 mL/g dilution, prepared using acetic acid and sodium acetate, J.T. Baker) that had be premixed at 70 °C for 60 minutes. Reaction 5e used a 60 mM buffer solution. The mixture was held at 70 °C for 20 hours. The reaction was then cooled and the product was filtered and washed successively with water and methanol (J.T. Baker). The material was then refluxed in a 0.1 M acetic acid solution (5 mL/g dilution, J.T. Baker) at 70 °C for 20 hours. Product 5q-5s were refluxed for 2 hours. The reaction was then cooled and the product was filtered and washed successively with water and methanol (J.T. Baker). The product was then dried at 80 °C under reduced pressure for 16 hours. Reaction data is listed in Table 5. Surface coverages of 0.55-7.05 μmol/$m^2$ were determined by the difference in particle %C before and after the surface modification as measured by elemental analysis. Analysis of these materials by $^{13}C$ CP-MAS NMR spectroscopy indicates for products 5a-5p had no measurable amount of epoxy groups remain, having only diol groups present for these materials. Products 5q-5s had a small amount of epoxy groups present. The acetic acid hydrolysis step was repeated for 5q-5s with a 20 hour hold. The products of these reactions had comparable surface coverage, and had no measurable amount of epoxy groups remaining by $^{13}C$ CP-MAS NMR spectroscopy. Product 5a had a further treatment by heating in 100 mM phosphate buffer (pH 7.0, 10 mL/g dilution) at 70 °C for 2 hours. The resulting material had comparable surface coverage as product 5a.

**TABLE 5**

| Product | Precursor | Hybrid (g) | GLYMO (g) | %C | Surface Coverage (μmol/$m^2$) |
|---|---|---|---|---|---|
| 5a | 3e | 24.5 | 12.28 | 12.56 | 6.03 |
| 5b | 3g | 30 | 15.51 | 12.13 | 5.27 |
| 5c | 3g | 30 | 15.51 | 12.13 | 5.27 |
| 5d | 3f | 9 | 4.72 | 12.94 | 6.25 |
| 5e | 3f | 9 | 4.72 | 13.59 | 7.05 |
| 5f | 3h | 30 | 15.65 | 12.08 | 5.25 |
| 5g | 3i | 90 | 45.43 | 11.86 | 5.20 |
| 5h | 3j | 40 | 20.67 | 11.73 | 4.81 |
| 5i | 3j | 20 | 10.34 | 12.83 | 6.07 |
| 5j | 3j | 25 | 12.92 | 12.59 | 5.78 |
| 5k | 3k | 60 | 30.14 | 12.14 | 5.24 |
| 5l | 3k | 60 | 30.14 | 12.17 | 5.27 |
| 5m | 3k | 15 | 7.53 | 12.43 | 5.57 |
| 5n | 3k | 15 | 7.53 | 12.24 | 5.35 |
| 5o | 3k | 15 | 7.75 | 12.48 | 5.63 |
| 5p | 3k | 15 | 7.75 | 12.49 | 5.64 |
| 5q | 3f | 20 | 5.05 | 10.88 | 3.97 |
| 5r | 3f | 20 | 8.98 | 12.01 | 5.18 |
| 5s | 3f | 20 | 11.64 | 12.99 | 6.31 |
| 5t | 3x | 18 | 1.48 | 8.36 | 0.55 |

(continued)

| Product | Precursor | Hybrid (g) | GLYMO (g) | %C | Surface Coverage (μmol/m$^2$) |
|---|---|---|---|---|---|
| 5u | 3x | 18 | 9.82 | 13.90 | 3.65 |
| 5v | 3x | 18 | 15.19 | 14.68 | 4.20 |
| 5w | 3x | 10 | 9.24 | 15.18 | 4.58 |
| 5x | 3o | 6.4 | 3.60 | 12.99 | 6.11 |
| 5y | 3p | 5 | 4.12 | 13.43 | 7.14 |
| 5z | 3q | 73 | 38.42 | 12.55 | 5.64 |
| 5aa | 3r | 10 | 5.17 | 12.75 | 6.15 |
| 5ab | 3y | 27 | 7.40 | 9.01 | 4.71 |
| 5ac | 3y | 12 | 3.60 | 9.14 | 5.01 |
| 5ad | 3y | 12 | 4.32 | 9.20 | 5.13 |
| 5ae | 3aa | 90 | 27.08 | 8.87 | 4.66 |
| 5af | 3z | 15 | 2.90 | 8.66 | 4.20 |
| 5ag | 3z | 15 | 4.42 | 8.87 | 4.71 |
| 5ah | 3z | 15 | 5.67 | 9.07 | 5.20 |

## EXAMPLE 6

Porous silica or hybrid particles are refluxed in toluene (175 mL, Fisher Scientific, Fairlawn, NJ) for 1 hour. A Dean-Stark trap was used to remove trace water from the mixture. Upon cooling, imidazole (Aldrich, Milwaukee, WI) and one or more surface modifiers are added. The reaction is then heated to reflux for 16-18 hours. The reaction is then cooled and the product was filtered and washed successively with toluene, water, and acetone (all solvents from Fisher Scientific). The material is further refluxed in an acetone / aqueous 0.12 M ammonium acetate solution (Sigma Chemical Co., St. Louis, MO) for 2 hours. The reaction is cooled and the product is filtered and washed successively with water, and acetone (all solvents from Fisher Scientific). The product is dried at 70 °C under reduced pressure for 16 hours. The surface coverage is determined by the difference in particle %C before and after the surface modification using elemental analysis. Product can be further reacted with trimethylchlorosilane, trimethylchlorosilane, tri-n-butylchlorosilane, tri-i-propylchlorosilane, t-butyldimethylchlorosilane, or hexamethyldisilazane under similar conditions to further react surface silanol groups.

This general approach can be applied to a variety of different porous materials. Included in this spherical, granular, and irregular materials that are silica or hybrid inorganic/organic materials. The particles size for spherical, granular or irregular materials can vary from 0.4-3.0 μm; or from 1-3 μm. The APD for these materials can vary from 50 to 2,000 Å; or from 90 to 1000 Å; or from 120 to 450 Å. The TPV for these materials can vary from 0.5 to 1.7 cm$^3$/g; or from 1.0 to 1.5 cm$^3$/g; or from 1.1 to 1.4 cm$^3$/g.

Surface modifiers used in these reactions include silanes having **Formula 2** as described herein.

## EXAMPLE 7a

Samples of porous particles from test material 5g in Example 5 were used for the separation of a mixture of proteins. The 4.6×150mm chromatographic columns were packed using a slurry packing technique. The chromatographic system consisted of an ACQUITY UPLC® System and an ACQUITY UPLC® Tunable UV detector. Empower 2 Chromatography Data Software (Build 2154) was used for data collection and analysis. Mobile phase conditions were: 100 mM Na2HPO4/NaH2PO4, pH 6.8; flow rate: 0.30 mL/min; temperature: 30°C; detection: 280 nm; analytes: Thyroglobulin, IgG, Bovine serum albumin, Myoglobin and uracil. Results are shown in Figure 2.

## EXAMPLE 7b

Samples of porous particles from containing a C18 modified surface are used for the separation of a mixture of polystyrene standards. The 4.6×150mm chromatographic columns are packed using a slurry packing technique. The chromatographic system consisted of an ACQUITY UPLC® System and an ACQUITY UPLC® Tunable UV detector. Empower 2 Chromatography Data Software (Build 2154) is used for data collection and analysis. Mobile phase consisted of tetrahydrofuran. Flow rate was 0.30 mL/min; temperature: 30°C; detection: 260 nm; Analytes: Polystyrene standards ranging in molecular weight from 500 Da to 2,000,000 Da.

## EXAMPLE 8

The chromatographic media described herein has been shown to maintain the mechanical strength requirements necessary of a 1.7 micron particle for UPLC applications. Similarly, the reduced silanol acidity on BEH particles compared to traditional silica results in decreased secondary interactions for charged analytes.

Figure 14 shows the effect of ionic strength on the retention of the basic protein lysozyme. In the case of low salt, the electrostatic interactions between the negatively charged silanols on the stationary phase surface and the positively charged lysozyme are the greatest. By increasing the ionic strength of the mobile phase, the electrostatic interactions between analyte and stationary phase become weaker. The Figure shows that in the case of SEC diol material made from silica, the silanol interactions are significantly greater than the material made from BEH.

## EXAMPLE 9

This Example discusses the effect of particle size, pore volume and pore size distribution on chromatographic resolution, as well as the effect of temperature on SEC performance. Examples are given of size-based separations, including separations of monoclonal antibody monomers from aggregates.

### *MATERIALS PROPERTIES*

Stationary phase particles were synthesized with different total pore volume, mean pore size, surface area, and mean particle size. All materials were diol-bonded to provide a stable chemical surface that exhibited low protein binding.

**Table 6.** Properties of chromatographic materials used in this study.

| Material | dp (μm) | Mean Pore Dia (Å) | Specific Surface Area ($m^2$/g) | Total Pore Volume ($cm^3$/g) |
|---|---|---|---|---|
| A | 2.5 | 297 | 86 | 0.68 |
| B | 2.6 | 239 | 108 | 0.69 |
| C | 1.8 | 139 | 182 | 0.69 |
| D | 2.6 | 191 | 135 | 0.72 |
| E | 1.7 | 311 | 217 | 0.73 |
| F | 1.6 | 348 | 112 | 1.12 |
| G | 1.6 | 193 | 207 | 1.16 |
| H | 2.8 | 213 | 225 | 1.42 |
| I | 2.4 | 259 | 209 | 1.63 |
| J | 2.0 | 201 | 217 | 1.30 |
| K | 1.7 | 203 | 218 | 1.27 |
| Comp - L | 4 | 233 | 229 | 1.52 |

### *EFFECT OF PARTICLE SIZE AND PORE DIAMETER ON EFFICIENCY*

The introduction of sub 2 micron particles and Ultra-Performance Liquid Chromatography instrumentation has led to significant improvements in chromatographic efficiency and throughput compared to traditional HPLC separations for reversed-phase chromatography. However, to-date, similar benefits have not been demonstrated for other modes of chromatography, such as size-exclusion chromatography. A recent publication by Held et al. states that such benefits cannot be achieved with columns packed with sub-two micron particles for SEC. (D Held, G Reinhold and P Kilz, "U-GPC? Making GPC/SEC Faster," The Column (April 6, 2010) 10-14)

The effect of flow rate on the chromatographic separation of various proteins on columns packed with particles of a range of pore sizes and particle sizes was evaluated. Retention time and peak width data were first corrected for system effects. Plots of plate height vs. interstitial linear velocity (measured at 50% peak height) are shown in Figures 3 and 4. Results show significantly improved performance for the column with 1.7 μm particles compared to 2.6 μm particles. For proteins, the flow rates used were significantly higher than the diffusion-limited region, so data were fit to

the linear equation, $H=A + C \cdot u$. Theory predicts that the A- and C- terms are proportional to $1/d_p$ and $1/d_p^2$, respectively. The experimental data fits well to this expectation. It was also observed that pore size has limited impact on chromatographic performance as a function of flow rate.

**Table 7.** A- and C- terms obtained from Figures 3 & 4. Note large A-terms, which may be a result from partial resolution of multiple components in the peak.

| | Prototype "K" 1.7μm, 203Å | | | Prototype "D" 2.6μm, 191Å | | | Prototype "B" 2.6μm, 239Å | | | Prototype "A" 2.5μm, 297Å | | |
|---|---|---|---|---|---|---|---|---|---|---|---|---|
| | A | C | $r^2$ | A | C | $r^2$ | A | C | $r^2$ | A | C | $r^2$ |
| Ribonuclease A | 3.12 | 1.36 | 0.9886 | 4.33 | 6.99 | 0.9982 | 5.38 | 6.00 | 0.9963 | 5.32 | 5.73 | 0.9982 |
| Ovalbumin monomer | 15.92 | 1.74 | 0.9741 | 13.30 | 11.81 | 0.9991 | 11.36 | 25.43 | 0.9980 | 10.91 | 21.99 | 0.9960 |
| Ovalbumin dimmer | 30.86 | 4.23 | 0.9199 | 19.19 | 35.82 | 0.9949 | N.D. | N.D. | N.D. | N.D. | N.D. | N.D. |
| IgG1 monomer | 10.77 | 3.83 | 0.9749 | 13.93 | 37.45 | 0.9973 | 12.09 | 9.85 | 0.9978 | 10.08 | 8.88 | 0.9991 |
| IgG2 monomer | 6.80 | 6.66 | 0.9953 | 14.77 | 43.19 | 0.9979 | 19.65 | 29.17 | 0.9998 | 15.16 | 24.67 | 0.9982 |
| IgG2 dimer | 47.82 | 13.40 | 0.9335 | 24.18 | 111.91 | 0.9937 | N.D. | N.D. | N.D. | N.D. | N.D. | N.D. |

**Table 8** $A/d_p$ and $C/d_p$ obtained from Figures 3 & 4.

| | Prototype "K" | | Prototype pe "D" | | Prototype "B" | | Prototype "A" | |
|---|---|---|---|---|---|---|---|---|
| | $A/d_p$ | $C/d_p^2$ | $A/d_p$ | $C/d_p^2$ | $A/d_p$ | $C/d_p^2$ | $A/d_p$ | $C/d_p^2$ |
| Ribonuclease A | 2.082 | 0.607 | 1.505 | 0.842 | 1.873 | 0.728 | 1.893 | 2.038 |
| Ovalbumin monomer | 10.611 | .0773 | 4.619 | 1.424 | 3.959 | 3.087 | 3.882 | 7.825 |
| Ovalbumin dimmer | 20.571 | 1.879 | 6.663 | 4.319 | N.D. | N.D. | N.D. | N.D. |
| IgG1 monomer | 7.177 | 1.702 | 4.836 | 4.515 | 4.212 | 1.196 | 3.589 | 3.160 |
| IgG2 monomer | 4.534 | 2.960 | 5.128 | 5.207 | 6.848 | 3.541 | 5.395 | 8.780 |
| IgG2 dimer | 31.879 | 5.955 | 8.396 | 13.492 | N.D. | N.D. | N.D. | N.D. |

***EFFECT OF PORE VOLUME ON SELECTIVITY***

Retention times for proteins were determined for columns packed with Materials A-I, which varied in total pore volume from 0.68-1.63 $cm^3/g$, as shown in Table 6. A plot of retention volume vs. log MW was plotted for each of the materials (Figure 5). The slope of the each of the curves (in the representative linear region) was determined for each column. Figure 6 shows a plot of the pore volume vs. the slope.

As can be seen, a good correlation is obtained between these two factors.

***MAb MONOMER/AGGREGATE SEPARATION***

The effect of flow rate on the resolution of a monoclonal antibody monomer and dimer was compared for a column packed with Prototype "K", 4.6×150mm and a Comparative Column "L" , 4.6x300mm column. Despite the shorter column length of the former column, comparable resolution for the two columns was found when operated at identical flow rates. The smaller particles in the column packed with Prototype "K" provided for even shorter run times by enabling operation at faster flow rates, while still achieving the requisite resolution.

Figures 7 and 8 show the effect of flow rate on the separation of a monoclonal antibody monomer and dimer.

Figures 9 and 10 show the Effect of flow rate on plate height and resolution for separation of monoclonal antibody monomer and dimer.

***INFLUENCE OF TEMPERATURE***

The impact of temperature on a chromatographic separation is determined thermodynamically by the expression:

$$\ln k = \Delta H./RT - \Delta S./R + \ln(\varphi)$$

where $\Delta H°$ and $\Delta S°$ are the respective standard enthalpies and entropies, R is the molar gas constant, T is the absolute temperature and $\varphi$ is the phase ratio of the column.

In adsorption chromatography, the entropy term can usually be neglected, as is negligible relative to the enthalpy term. However, in SEC mode, the opposite is true. Thus in an entropically driven separation such as SEC, retention should be primarily independent of temperature. However, chromatographic materials may have ionic or other functional groups on the surface that may induce binding. Ideally, the stationary phase and the chromatographic conditions are optimizedto prevent adsorption interactions.

Examining retention at different temperatures provides information as to whether adsorption is occurring. Other factors which may contribute to temperature-induced changes in retention, such as changes in conformation or changes in the hydration layer, could also be considered.

The chromatograms shown in Figure 11 show the effect of temperature on the retention of a Protein Test Mix. The top chromatogram was obtained using a column packed with Prototype "K", while the bottom chromatogram was from Comparative column "L". Significantly greater retention change was observed for proteins in the latter case. This is attributed to the greater acidity of silanols at the stationary phase surface, which can interact with and adsorb proteins.

Note in both cases, uracil retention was affected by temperature. Without being limited by theory, it is believed that this is due to H-bond interactions.

***INFLUENCE OF SALTS***

The effect of different salt additives to the mobile phase was explored. Both retention and peak shape were found to be influenced by salt type.

Chromatograms are shown in Figures 12 and 13, following the sequence of the Hofmeister Series for anions and cations:

$$SO_4^{2-} > PO_4^{2-} > OAc^- > Cl^- > ClO_4^-$$

$$NH_4^+ > K^+ > Na^+$$

In general, a decrease in retention was observed to follow the Hofmeister series, with the notable exception of sodium chloride. In this case, retention was greater than with other analytes. In addition, peaks were significantly broader.

## EXAMPLE 10

***EFFECTS ON NOISE REDUCTION, COLUMN BLEED AND GHOST PEAKS***

SEC columns are known to shed particles during use. MALS detectors are highly sensitive to these particles. In this study, "column bleed" is defined as the random shedding of particles which results in an increase in the incidence of baseline noise. Particle shedding also can occur when an injection is made onto the LC column. The result of this is a broad "ghost peak" which elutes at the retention time of the excluded marker. Ghost peaks prevent quantitation of analytes that elute near the exclusion window. The cause of ghost peaks is believed to be result from a pressure shock which occurs during injection, resulting in a band of particles traversing the column to the detector. Column manufacturers suggest that columns be extensively washed prior to use, in order to reduce column bleed and ghost peaks.

**Experimental:**

LC System: Waters ACQUITY UPLC® H-Class Bio
Mobile Phase: 100mM Sodium Phosphate Buffer, pH 6.8
Temperature: ambient
Flow rate: 0.2-0.5 mL/min
Sample: BSA 3mg/mL
Injection volume: 10 μL
Column Equilibration: 20 minutes @ 0.2 mL/min
Detector 1: Waters ACQUITY PDA, 280nm
Detector 2: Wyatt miniDAWN™ TREOS MALS Detector, 90° degrees from incidence
MALS Data acquisition rate: 15 Hz
A 4.6x150mm column with Prototype "K" was tested, along with three 4.6x300 mm columns (Comparative columns "L", "M", and "N").

**Results:**

Figures 15-19 show chromatograms from the separation of BSA using a column with Prototype "K" and Comparative columns "L", "M", and "N". Figures 15 and 16 show results on Prototype "K" column when run at flow rates of 0.2 and 0.5 mL/min, respectively. Figures 17, 18 and 19 are results from Comparative columns L, M and N when run at a flow rate of 0.3 mL/min. The Figures show traces from both the UV and light-scattering detectors. Column bleed was found to be substantially less on the Prototype "K" column compared to the three Comparative columns, as measured by both the frequency and the magnitude of the noise. Prototype column "K" exhibited more than a 5-fold reduction in RMS noise and frequency of random noise compared to the comparative columns.
Prototype column K showed no ghost peak under the conditions tested, while Prior Art columns L and N showed evidence of ghost peaks. A broad peak is observed in both Figures 17 and 19, with retention times of 4.9 and 5.5 minutes, respectively.

**Equivalents**

The functions of several elements may, in alternative embodiments, be carried out by fewer elements, or a single element. Similarly, in some embodiments, any functional element may perform fewer, or different, operations than those described with respect to the illustrated embodiment. Also, functional elements (e.g., modules, computers, and the like) shown as distinct for purposes of illustration may be incorporated within other functional elements, separated in different hardware or distributed in a particular implementation.

While certain embodiments according to the invention have been described, the invention is not limited to just the described embodiments. Various changes and/or modifications can be made to any of the described embodiments without departing from the spirit or scope of the invention. Also, various combinations of elements, steps, features, and/or aspects of the described embodiments are possible and contemplated even if such combinations are not expressly identified herein.

**INCORPORATION BY REFERENCE**

The entire contents of all patents, published patent applications, and other references cited herein are hereby expressly incorporated herein in their entireties by reference.

This divisional application is divided from 10842551.3 filed on 15 December 2010 at the United States Patent Office (the 'parent application') and the divisional specification as filed comprises the content of the parent application, including, but not limited to, the description, any drawings, any sequence listing(s) and the original claims recited as 'representative features'. The scope of this disclosure therefore includes the full content of the parent application. In any case, protection may be sought for any features disclosed in the parent application as filed.

Aspects of the invention will now be described with reference to the following numbered clauses.

1. A device for performing size exclusion chromatography comprising:

   a housing having at least one wall defining a chamber having an entrance and an exit; and
   a stationary phase material comprising a core and a surface composition held in said chamber;

   wherein said stationary phase material comprises particles or a monolith represented by **Formula 1:**

   W-[X] -Q **Formula 1**

   wherein:

   X is core composition having a surface comprising a silica core material, a metal oxide core material, an organic-inorganic hybrid core material or a group of block polymers thereof thereof;
   W is hydrogen or hydroxyl; and
   Q is absent or is a functional group that minimizes electrostatic interactions, Van der Waals interactions, Hydrogen-bonding interactions or other interactions with an analyte.

2. The device for performing size exclusion chromatography according to clause 1, wherein W and Q occupy free valences of the core composition, X, or on the surface of said core composition

3. The device for performing size exclusion chromatography according to clause 1, wherein W and Q are selected to form a surface composition on the surface of said core composition, and X forms a block polymer or group of block polymers.

4. The device for performing size exclusion chromatography according to clause 1, wherein the stationary phase comprises particles.

5. The device for performing size exclusion chromatography according to clause 4, wherein the.particles of the stationary phase material have diameters with a mean size distribution of 0.4 -3.0 microns.

6. The device for performing size exclusion chromatography according to clause 5, wherein the particles of the stationary phase material have diameters with a mean size distribution of 1.0-3.0 microns.

7. The device for performing size exclusion chromatography according to clause 1, wherein the stationary phase

comprises a monolith.

8. The device for performing size exclusion chromatography according to clause 7, wherein the monolith of the stationary phase material exhibits the chromatographic efficiency and permeability of a particle bed packed with particles having a mean size distribution of 0.4 3.0 microns.

9. The device for performing size exclusion chromatography according to clause 8, wherein the monolith of the stationary phase material exhibits the chromatographic efficiency and permeability of a particle bed packed with particles having a mean size distribution of 1.0 - 3.0 microns.

10. The device for performing size exclusion chromatography according to clause 1, wherein the particles or the monolith of the stationary phase material have a pore volume of 0.8 to 1.7 $cm^3/g$.

11. The device for performing size exclusion chromatography according to clause 10, wherein the stationary phase material has a pore volume of 1.0 to 1.5 $cm^3/g$.

12. The device for performing size exclusion chromatography according to clause 11, wherein the stationary phase material has a pore volume of 1.1 to 1.5 $cm^3/g$.

13. The device for performing size exclusion chromatography according to clause 1, wherein the chamber is capable of performing size exclusion chromatography at a column inlet pressuregreater than 1,000 psi.

14. The device for performing size exclusion chromatography according to clause 13, wherein the chamber is capable of performing size exclusion chromatography at a column inlet pressuregreater than 5,000 psi.

15. The device for performing size exclusion chromatography according to clause 14, wherein chamber is capable of performing size exclusion chromatography at a column inlet pressuregreater than 7,000 psi.

16. The device for performing size exclusion chromatography according to clause 15, wherein chamber is capable of performing size exclusion chromatography at a column inlet pressuregreater than 10,000 psi.

17. The device for performing size exclusion chromatography according to clause 1, wherein X is a silica core, a titanium oxide core, an aluminum oxide core, an organic-inorganic hybrid core, or an organic-inorganic hybrid core comprising an aliphatic bridged silane.

18. The device for performing size exclusion chromatography according to clause 17, wherein X is an organic-inorganic hybrid core comprising an aliphatic bridged silane.

19. The device for performing size exclusion chromatography according to clause 18, wherein the aliphatic group of the aliphatic bridged silane is ethylene.

20. The device for performing size exclusion chromatography according to clause 1, wherein Q is a hydrophilic group.

21. The device for performing size exclusion chromatography according to clause 1, wherein Q is a hydrophobic group.

22. The device for performing size exclusion chromatography according to clause 1, wherein Q is absent.

23. The device for performing size exclusion chromatography according to clause 20, wherein Q is an aliphatic group.

24. The device for performing size exclusion chromatography according to clause 23, wherein said aliphatic group is an aliphatic diol.

25. The device for performing size exclusion chromatography according to clause 1, wherein Q is represented by **Formula 2**

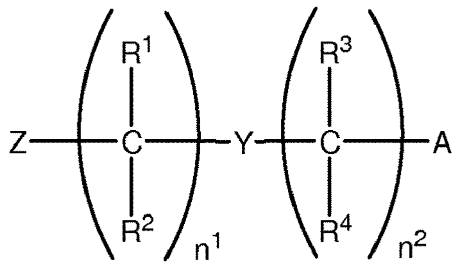

**Formula 2**

wherein

**$n^1$** an integer from 0-30;
**$n^2$** an integer from 0-30;
each occurrence of **$R^1$**, **$R^2$**, **$R^3$** and **$R^4$** independently represents hydrogen, fluoro, lower alkyl, a protected or deprotected alcohol, a zwiterion, or a group **Z;**
**Z** represents:

**a)** a surface attachment group produced by formation of covalent or non-covalent bond between the surface of the stationay phase material with a moiety of **Formula 3**:

$(B^1)_x(R^5)_y(R^6)_zSi$- **Formula 3:**

wherein **x** is an integer from 1-3,

**y** is an integer from 0-2,
**z** is an integer from 0-2,
and **x+y+z** = 3

each occurrence of **$R^5$** and **$R^6$** independently represents methyl, ethyl, *n*-butyl, *iso*-butyl, *tert-butyl, iso*-propyl, thexyl, substituted or unsubstituted aryl, cyclic alkyl, branched alkyl, lower alkyl, a protected or deprotected alcohol, or a zwiterion group;
**$B^1$** represents $-OR^7$, $-NR^{7'}R^{7''}$, $-OSO_2CF_3$, or -Cl; where each of **$R^7$,$R^{7'}$** and **$R^{7''}$** represents hydrogen, methyl, ethyl, *n*-butyl, *iso*-butyl, *tert*-butyl, *iso*-propyl, thexyl, phenyl, branched alkyl or lower alkyl;

**b)** a direct attachment to a surface hybrid group of X through a direct carbon-carbon bond formation or through a heteroatom, ester, ether, thioether, amine, amide, imide, urea, carbonate, carbamate, heterocycle, triazole, or urethane linkage; or
**c)** an adsorbed group that is not covalently attached to the surface of the stationary phase material;
**d)** a surface attachment group produced by formation of a covalent bond between the surface of the stationary phase material, when W is hydrogen, by reaction with a vinyl or alkynyl group;

**Y** represents a direct bond; a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrates, a dendrimer or dendrigraphs, or a zwitterion group; and
**A** represents

i.) a hydrophilic terminal group;
ii.) hydrogen, fluoro, fluoroalkyl, lower alkyl, or group **Z;** or
iii.) a functionalizable group.

26. The device for performing size exclusion chromatography according to clause 25 wherein **$n^1$** an integer from 2-18.

27. The device for performing size exclusion chromatography according to clause 26 wherein $\mathbf{n^1}$ an integer from 2-6.

28. The device for performing size exclusion chromatography according to clause 25 wherein $\mathbf{n^2}$ an integer from 0-18.

29. The device for performing size exclusion chromatography according to clause 28 wherein $\mathbf{n^2}$ an integer from 0-6.

30. The device for performing size exclusion chromatography according to clause 25 wherein $\mathbf{n^1}$ an integer from 2-18 and $\mathbf{n^2}$ an integer from 0-18.

31. The device for performing size exclusion chromatography according to clause 30 wherein $\mathbf{n^1}$ an integer from 2-6 and wherein $\mathbf{n^2}$ an integer from 0-18.

32. The device for performing size exclusion chromatography according to clause 25 wherein $\mathbf{n^1}$ an integer from 2-18 and $\mathbf{n^2}$ an integer from 0-6.

33. The device for performing size exclusion chromatography according to clause 32 wherein $\mathbf{n^1}$ an integer from 2-6 and and $\mathbf{n^2}$ an integer from 0-6.

34. The device for performing size exclusion chromatography according to clause 25, wherein **A** represents i) a hydrophilic terminal group and said hydrophilic terminal group is a protected or deprotected forms of an alcohol, diol, glycidyl ether, epoxy, triol, polyol, pentaerythritol, pentaerythritol ethoxylate, 1,3-dioxane-5,5-dimethanol, tris(hydroxymethyl)aminomethane, tris(hydroxymethyl)aminomethane polyglycol ether, ethylene glycol, propylene glycol, poly(ethylene glycol), poly(propylene glycol), a mono-valent, divalent, or polyvalent carbohydrate group, a multi-antennary carbohydrate, a dendrimer containing peripheral hydrophilic groups, a dendrigraph containing peripheral hydrophilic groups, or a zwitterion group.

35. The device for performing size exclusion chromatography according to clause 25, wherein **A** represents ii.) hydrogen, fluoro, methyl, ethyl, n-butyl, t-butyl, i-propyl, lower alkyl, fluoroalkyl, or group **Z.**

36. The device for performing size exclusion chromatography according to clause 25, wherein A represents iii.) a functionalizable group, and said functionalizable group is a protected or deprotected form of an amine, alcohol, silane, alkene, thiol, azide, or alkyne.

37. The device for performing size exclusion chromatography according to clause 36, wherein said functionalizable group can give rise to a new surface group in a subsequent reaction step wherein said reaction step is coupling, metathesis, radical addition, hydrosilylation, condensation, click, or polymerization.

38. The device for performing size exclusion chromatography according to clause 1, wherein the housing is equipped with one or more frits to contain the stationary phase material.

39. The device for performing size exclusion chromatography according to clause 1, wherein the housing is equipped with one or more fittings capable of placing the device in fluid communication with a sample injection device, a detector or both.

40. A method of performing size exclusion chromatography comprising the steps of

A. ) providing a housing having at least one wall defining a chamber having an entrance and an exit; and a stationary phase material comprising a core and surface composition held in said chamber;
wherein said stationary phase material comprises particles or a monolith represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions,

Hydrogen-bonding interactions or other interactions with an analyte.

B.) loading a sample on said stationary material said chamber at a column inlet pressureof greater than 1,000 psi and flowing the sample through said stationary phase media; and
C.) separating the sample into one or more compositions by size.

41. The method of performing size exclusion chromatography of clause 40, wherein the column inlet pressure is greater than 5,000 psi.

42. The method of performing size exclusion chromatography of clause 41, wherein the column inlet pressure is greater than 7,000 psi.

43. The method of performing size exclusion chromatography of clause 42, wherein the column inlet pressure is greater than 10,000 psi.

44. The method of performing size exclusion chromatography of clause 40, further comprising the step of
D.) isolating the one or more compositions.

45. The method of performing size exclusion chromatography of clause 40, further comprising the step of
E.) detecting the one or more compositions.

46. The method of performing size exclusion chromatography of clause 40, further comprising the steps of

D.) isolating the one or more compositions; and
E.) detecting the one or more compositions.

47. The method of performing size exclusion chromatography of clause 40, wherein the sample is a biopolymer.

48. The method of performing size exclusion chromatography of clause 47, wherein Q is hydrophilic.

49. The method of performing size exclusion chromatography of clause 48, wherein Q is a aliphatic group.

50. The method of performing size exclusion chromatography of clause 49, wherein the aliphatic group is an aliphatic diol.

51. The method of performing size exclusion chromatography of clause 40, wherein Q is represented by Formula 2

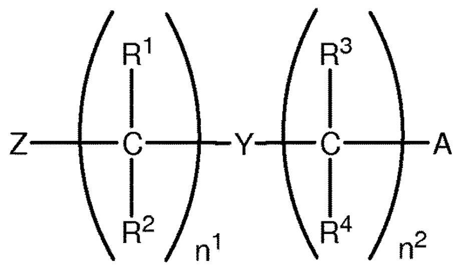

**Formula 2**

wherein

**$n^1$** an integer from 0-30;
**$n^2$** an integer from 0-30;
each occurrence of **$R^1$**, **$R^2$**, **$R^3$** and **$R^4$** independently represents hydrogen, fluoro, lower alkyl, a protected or deprotected alcohol, a zwiterion, or a group **Z;**
**Z** represents:

**a)** a surface attachment group produced by formation of covalent or non-covalent bond between the surface

of the stationay phase material with a moiety of **Formula 3:**

(B1)x(R5)y(R6)zSi- **Formula 3:**

wherein **x** is an integer from 1-3,

**y** is an integer from 0-2,
**z** is an integer from 0-2,
and **x+y+z** = 3

each occurrence of $\mathbf{R^5}$ and $\mathbf{R^6}$ independently represents methyl, ethyl, n-butyl, *iso*-butyl, *tert-butyl, iso*-propyl, thexyl, substituted or unsubstituted aryl, cyclic alkyl, branched alkyl, lower alkyl, a protected or deprotected alcohol, or a zwiterion group;
$\mathbf{B^1}$ represents $-OR^7$, $-NR^{7'}R^{7''}$, $-OSO_2CF_3$, or -Cl; where each of $\mathbf{R^7}$,$\mathbf{R^{7'}}$ and $\mathbf{R^{7''}}$ represents hydrogen, methyl, ethyl, *n*-butyl, *iso*-butyl, *tert-butyl, iso*-propyl, thexyl, phenyl, branched alkyl or lower alkyl;

**b)** a direct attachment to a surface hybrid group of X through a direct carbon-carbon bond formation or through a heteroatom, ester, ether, thioether, amine, amide, imide, urea, carbonate, carbamate, heterocycle, triazole, or urethane linkage; or

**c)** an adsorbed group that is not covalently attached to the surface of the stationary phase material;

**d)** a surface attachment group produced by formation of a covalent bond between the surface of the stationary phase material, when W is hydrogen, by reaction with a vinyl or alkynyl group;

**Y** represents a direct bond; a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrates, a dendrimer or dendrigraphs, or a zwitterion group; and
**A** represents

i. ) a hydrophilic terminal group;
ii. ) hydrogen, fluoro, fluoroalkyl, lower alkyl, or group **Z;** or
iii. ) a functionalizable group.

52. The method of performing size exclusion chromatography of clause 40, wherein the sample is a synthetic organic polymer.

53. The method of performing size exclusion chromatography of clause 52, wherein Q is a hydrophobic moiety.

54. A method of reducing the incidence of noise obtained by a light scattering detector during size exclusion chromatography exclusion chromatography comprising the steps of

A. ) providing a housing having at least one wall defining a chamber having an entrance and an exit; and a stationary phase material comprising a core and surface composition held in said chamber;
wherein said stationary phase material comprises particles or a monolith represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte.

B.) loading a sample on said stationary material said chamber at a column inlet pressureof greater than 1,000 psi and flowing the sample through said stationary phase media;

C.) separating the sample into one or more compositions by size; and

D.) detecting the one or more compositions using a light scattering detector

55. A method of reducing the incidence of ghost peaks obtained by a light scattering detector during size exclusion chromatography exclusion chromatography comprising the steps of

A. ) providing a housing having at least one wall defining a chamber having an entrance and an exit; and a stationary phase material comprising a core and surface composition held in said chamber;
wherein said stationary phase material comprises particles or a monolith represented by **Formula 1:**

W-[X] -Q **Formula 1**

wherein:

X is core composition having a surface comprising a silica core material, a metal oxide core material, an organic-inorganic hybrid core material or a group of block polymers thereof thereof;
W is hydrogen or hydroxyl; and
Q is absent or is a functional group that minimizes electrostatic interactions, Van der Waals interactions, Hydrogen-bonding interactions or other interactions with an analyte

B.) loading a sample on said stationary material said chamber at a column inlet pressureof greater than 1 ,000 psi and flowing the sample through said stationary phase media;

C.) separating the sample into one or more compositions by size; and

D.) detecting the one or more compositions using a light scattering detector.

## Claims

**1.** A device for performing size exclusion chromatography comprising:

a housing having at least one wall defining a chamber having an entrance and an exit; and
a stationary phase material comprising a core composition and a surface composition held in said chamber, wherein said stationary phase material comprises particles represented by Formula 1:

W-[X]-Q Formula 1

wherein:

X is core composition having a surface comprising an organic-inorganic hybrid core material;
W is hydrogen or hydroxyl; and
Q is a functional group that reduces electrostatic interactions, Van der Waals interactions and hydrogen bonding interactions with an analyte compared to where Q is absent, wherein Q is represented by Formula 2:

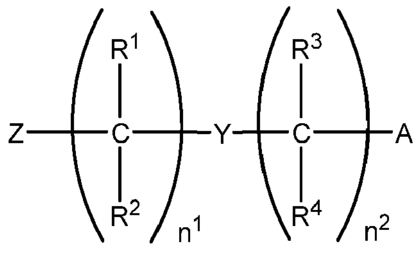

Formula 2

wherein:

$n^1$ is an integer from 0-30;
$n^2$ is an integer from 0-30;
each occurrence of $R^1$, $R^2$, $R^3$ and $R^4$ independently represents hydrogen, fluoro, lower alkyl, a protected or deprotected alcohol, a zwitterion, or a group Z;
Z represents:

a) a surface attachment group produced by formation of covalent or non-covalent bond between the surface of the stationary phase material with a moiety of Formula 3:

$(B^1)_x(R^5)_y(R^6)_zSi$- Formula 3

wherein:

x is an integer from 1-3;
y is an integer from 0-2;
z is an integer from 0-2;
x+y+z = 3;
each occurrence of $R^5$ and $R^6$ independently represents methyl, ethyl, n-butyl, *iso*-butyl, *tert*-butyl, *iso*-propyl, thexyl, substituted or unsubstituted aryl, cyclic alkyl, branched alkyl, lower alkyl, a protected or deprotected alcohol, or a zwitterion group; and
$B^1$ represents $-OR^7$, $-NR^{7'}R^{7''}$, $-OSO_2CF_3$, or -Cl; where each of $R^7$, $R^{7'}$ and $R^{7''}$ represents hydrogen, methyl, ethyl, n-butyl, *iso*-butyl, *tert-butyl, iso*-propyl, thexyl, phenyl, branched alkyl or lower alkyl;

b) an adsorbed group that is not covalently attached to the surface of the stationary phase material; or
c) a surface attachment group produced by formation of a covalent bond between the surface of the stationary phase material, when W is hydrogen, by reaction with a vinyl or alkynyl group;

Y represents: a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrate, a dendrimer, or a zwitterion group; and
A represents a functionalizable group, and
wherein the particles of the stationary phase material have diameters with a mean size distribution of 1.0-3.0 microns.

**2.** The device of claim 1, wherein A is a protected or deprotected form of an amine, alcohol, silane, alkene, thiol, azide, or alkyne, wherein preferably A can give rise to a new surface group in a subsequent reaction step wherein said reaction step is coupling, metathesis, radical addition, hydrosilylation, condensation, click, or polymerization.

**3.** The device of claim 1, wherein Q is $-Si(OCH_3)_2-(CH_2)_3-O-CH_2-CH(OH)CH_2OH$, or a mixture of $-Si(OCH_3)_2-(CH_2)_3-O-CH_2-CH(OH)CH_2OH$ and $-Si(OCH_3)_2-(CH_2)_3-O-CH_2-CHOCH_2$.

**4.** The device of claim 1, wherein the particles of the stationary phase material have a pore volume of 0.8 to 1.7 $cm^3/g$.

**5.** The device of claim 1, wherein X is an organic-inorganic hybrid core comprising an aliphatic bridged silane.

**6.** The device of claim 1, wherein the housing further comprises a first connection fitting at or about the entrance opening and a second connection fitting at or about the exit opening, the first connection fitting further comprising a fitting nut held to the at least one wall by cooperating threads or interlocking grooves, and the second connection fitting further comprising a second fitting nut held to the at least one wall by cooperating threads or interlocking grooves, and
wherein the chamber is capable of performing size exclusion chromatography at a column inlet pressure greater than 5,000 psi, preferably greater than 7,000 psi, more preferably greater than 10,000 psi.

**7.** The device of claim 1, wherein the core composition comprises pores, and wherein all pores of a diameter of about < 34 Å contribute less than about 110 $m^2/g$ to the specific surface area of the core composition.

**8.** A device for performing size exclusion chromatography comprising:

a housing having at least one wall defining a chamber having an entrance and an exit; and
a stationary phase material comprising a core composition and a surface composition held in said chamber, wherein said stationary phase material comprises particles represented by Formula 1:

W-[X]-Q Formula 1

wherein:

X is core composition having a surface comprising an organic-inorganic hybrid core material;
W is hydrogen or hydroxyl; and
Q is a functional group that reduces electrostatic interactions, Van der Waals interactions and hydrogen bonding interactions with an analyte compared to where Q is absent, wherein Q is represented by Formula 2:

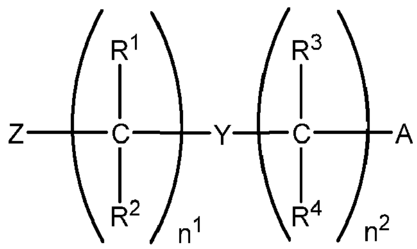

Formula 2

wherein:

$n^1$ is an integer from 0-30;
$n^2$ is an integer from 0-30;
each occurrence of $R^1$, $R^2$, $R^3$ and $R^4$ independently represents hydrogen, fluoro, lower alkyl, a protected or deprotected alcohol, a zwitterion, or a group Z;
Z represents:

a) a surface attachment group produced by formation of covalent or non-covalent bond between the surface of the stationary phase material with a moiety of Formula 3:

$(B^1)_x(R^5)_y(R^6)_zSi$- Formula 3

wherein:

x is an integer from 1-3;
y is an integer from 0-2;

z is an integer from 0-2;
x+y+z = 3;
each occurrence of $R^5$ and $R^6$ independently represents methyl, ethyl, n-butyl, *iso*-butyl, *tert*-butyl, *iso*-propyl, thexyl, substituted or unsubstituted aryl, cyclic alkyl, branched alkyl, lower alkyl, a protected or deprotected alcohol, or a zwitterion group; and
$B^1$ represents $-OR^7$, $-NR^{7'}R^{7''}$, $-OSO_2CF_3$, or -Cl; where each of $R^7$, $R^{7'}$ and $R^{7''}$ represents hydrogen, methyl, ethyl, n-butyl, *iso*-butyl, *tert-butyl, iso*-propyl, thexyl, phenyl, branched alkyl or lower alkyl;

b) an adsorbed group that is not covalently attached to the surface of the stationary phase material; or
c) a surface attachment group produced by formation of a covalent bond between the surface of the stationary phase material, when W is hydrogen, by reaction with a vinyl or alkynyl group;

Y represents a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrate, a dendrimer, or a zwitterion group; and
A represents a hydrophilic terminal group, and
wherein the particles of the stationary phase material have diameters with a mean size distribution of 0.4-3.0 microns.

**9.** The device of claim 8, wherein A is a protected or deprotected form of an alcohol, diol, glycidyl ether, epoxy, triol, polyol, pentaerythritol, pentaerythritol ethoxylate, 1,3-dioxane-5,5-dimethanol, tris(hydroxymethyl)aminomethane, tris(hydroxymethyl)aminomethane polyglycol ether, ethylene glycol, propylene glycol, poly(ethylene glycol), poly(propylene glycol), a mono-valent, divalent, or polyvalent carbohydrate group, a multi-antennary carbohydrate, a dendrimer containing peripheral hydrophilic groups, a dendrigraph containing peripheral hydrophilic groups, or a zwitterion group.

**10.** A method of performing size exclusion chromatography comprising the steps of

A.) providing: a housing having at least one wall defining a chamber having an entrance and an exit; and a stationary phase material comprising a core composition and a surface composition held in said chamber, wherein said stationary phase material comprises particles represented by Formula 1:

W-[X]-Q Formula 1

wherein:

X is core composition having a surface comprising a silica core material, a metal oxide core material, an organic-inorganic hybrid core material or a group of block polymers thereof;
W is hydrogen or hydroxyl; and
Q is a functional group that reduces electrostatic interactions, Van der Waals interactions and hydrogen bonding interactions with an analyte compared to where Q is absent, wherein Q is represented by Formula 2:

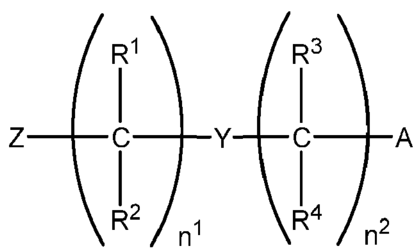

Formula 2

wherein:

$n^1$ is an integer from 0-30;

$n^2$ is an integer from 0-30;
each occurrence of $R^1$, $R^2$, $R^3$ and $R^4$ independently represents hydrogen, fluoro, lower alkyl, a protected or deprotected alcohol, a zwitterion, or a group Z;
Z represents:

a) a surface attachment group produced by formation of covalent or non-covalent bond between the surface of the stationary phase material with a moiety of Formula 3:

$$(B^1)_x(R^5)_y(R^6)_zSi- \qquad \text{Formula 3}$$

wherein:

x is an integer from 1-3;
y is an integer from 0-2;
z is an integer from 0-2;
and x+y+z = 3;
each occurrence of $R^5$ and $R^6$ independently represents methyl, ethyl, n-butyl, *iso*-butyl, *tert*-butyl, iso-propyl, thexyl, substituted or unsubstituted aryl, cyclic alkyl, branched alkyl, lower alkyl, a protected or deprotected alcohol, or a zwitterion group; and

$B^1$ represents $-OR^7$, $-NR^{7'}R^{7''}$, $-OSO_2CF_3$, or -Cl; where each of $R^7$, $R^{7'}$ and $R^{7''}$ represents hydrogen, methyl, ethyl, n-butyl, *iso*-butyl, *tert-butyl,* iso-propyl, thexyl, phenyl, branched alkyl or lower alkyl;

b) an adsorbed group that is not covalently attached to the surface of the stationary phase material; or
c) a surface attachment group produced by formation of a covalent bond between the surface of the stationary phase material, when W is hydrogen, by reaction with a vinyl or alkynyl group;

Y represents: a heteroatom linkage; an ester linkage; an ether linkage; a thioether linkage; an amine linkage; an amide linkage; an imide linkage; a urea linkage; a thiourea linkage; a carbonate linkage; a carbamate linkage; a heterocycle linkage; a triazole linkage; a urethane linkage; a diol linkage; a polyol linkage; an oligomer of styrene, ethylene glycol, or propylene glycol; a polymer of styrene, ethylene glycol, or propylene glycol; a carbohydrate group, a multi-antennary carbohydrate, a dendrimer, or a zwitterion group; and
A represents

i.) a hydrophilic terminal group; or
ii) a functionalizable group, and

wherein the particles of the stationary phase material have diameters with a mean size distribution of 1.0-3.0 microns;

B.) loading a sample on said stationary phase material in said chamber at a column inlet pressure of greater than 1,000 psi and flowing the sample through said stationary phase material; and
C.) separating the sample into one or more compositions by size.

**11.** The method of claim 10, wherein the column inlet pressure is greater than 5,000 psi, preferably greater than 7,000 psi, more preferably greater than 10,000 psi.

**12.** The method of claim 10, further comprising the step of
D.) isolating the one or more compositions.

**13.** The method of claim 10 or claim 12, further comprising the step of
E.) detecting the one or more compositions.

**14.** The method of claim 10, wherein the sample is a biopolymer.

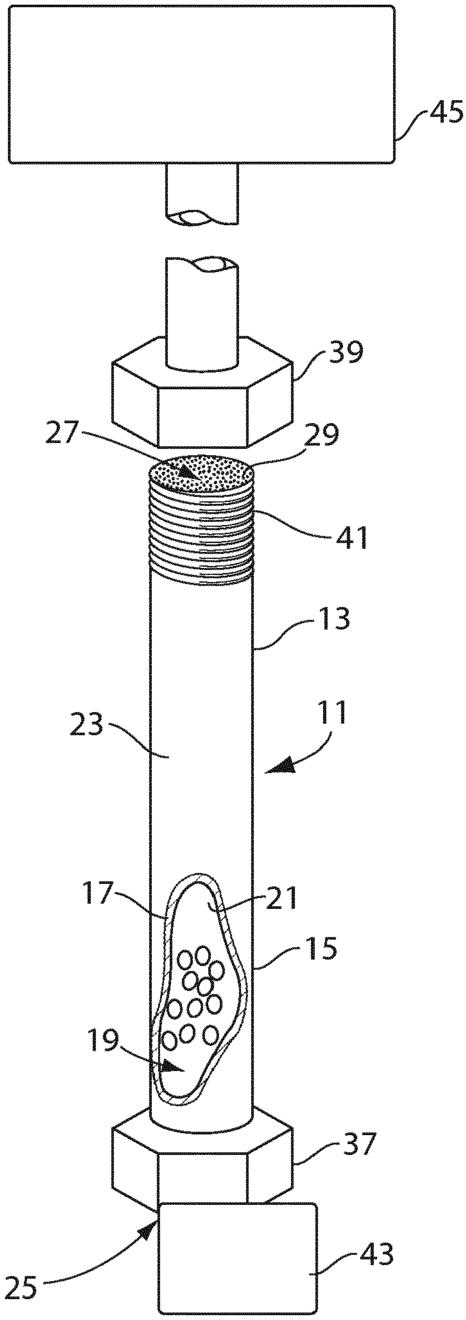


Fig. 1

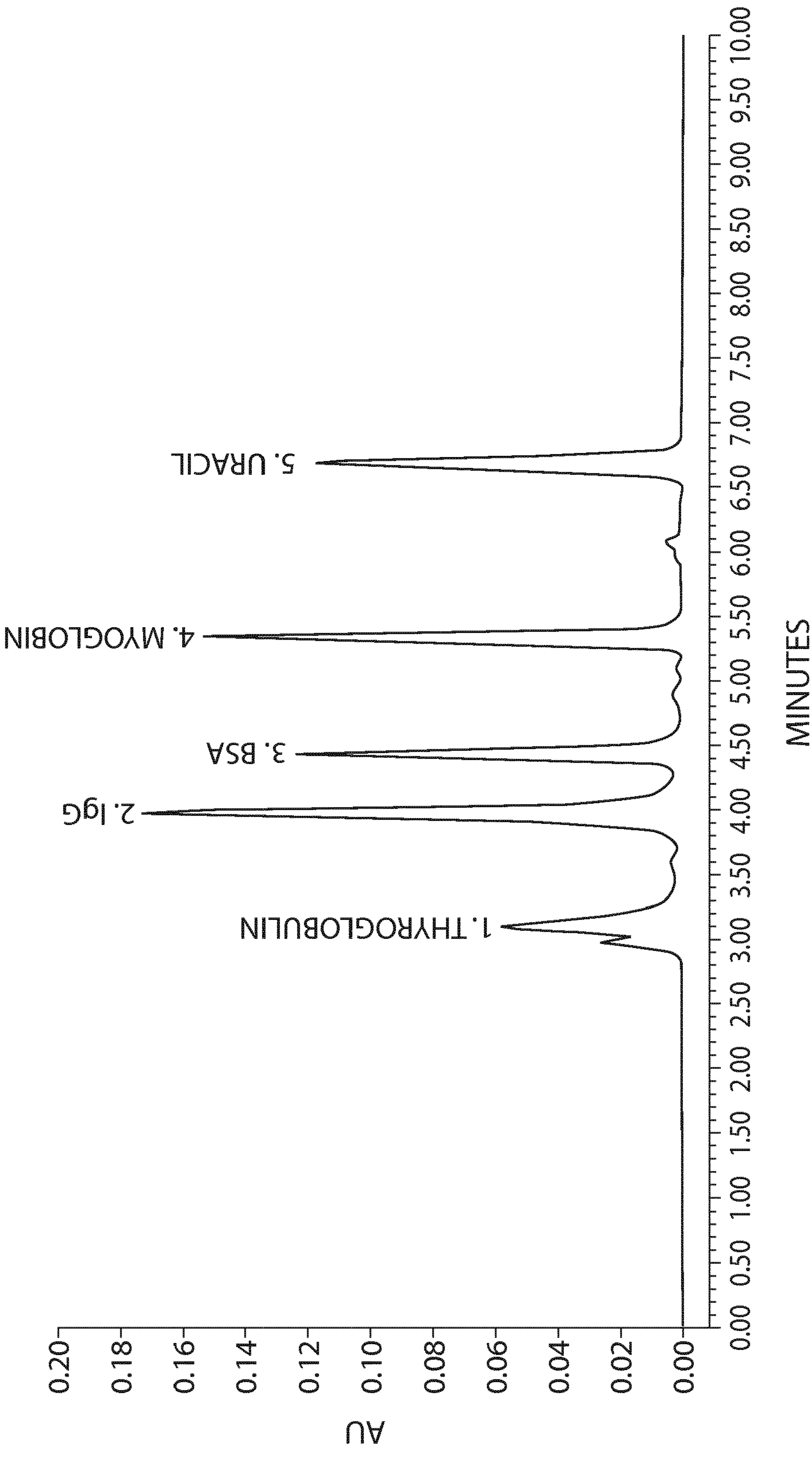
1. THYROGLOBULIN
2. IgG
3. BSA
4. MYOGLOBIN
5. URACIL
AU
0.20
0.18
0.16
0.14
0.12
0.10
0.08
0.06
0.04
0.02
0.00
0.00 0.50 1.00 1.50 2.00 2.50 3.00 3.50 4.00 4.50 5.00 5.50 6.00 6.50 7.00 7.50 8.00 8.50 9.00 9.50 10.00
MINUTES

Fig. 2

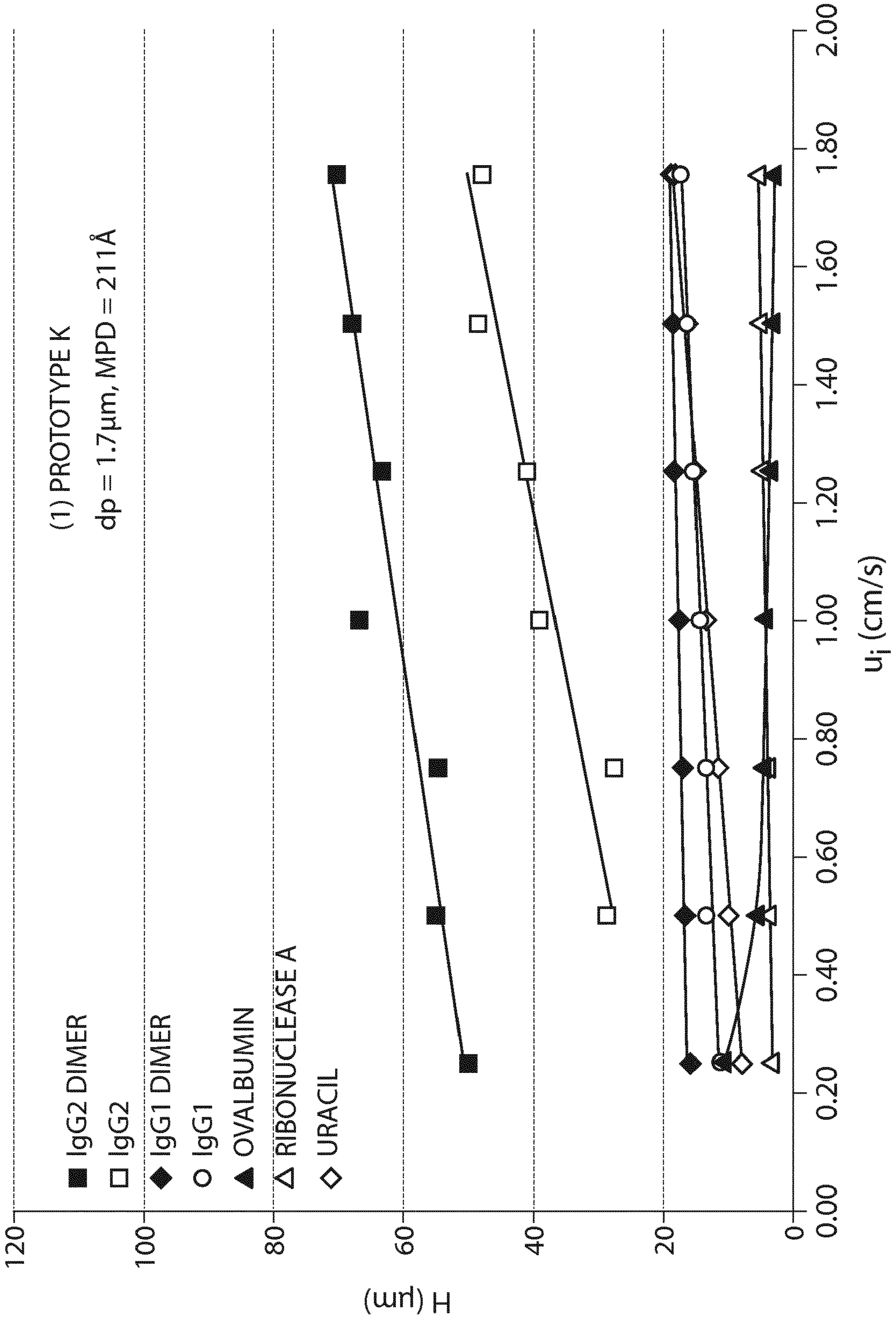
(1) PROTOTYPE K
dp = 1.7µm, MPD = 211Å
IgG2 DIMER
IgG2
IgG1 DIMER
IgG1
OVALBUMIN
RIBONUCLEASE A
URACIL
H (µm)
0
20
40
60
80
100
120
0.00
0.20
0.40
0.60
0.80
1.00
1.20
1.40
1.60
1.80
2.00
$u_i$ (cm/s)

Fig. 3

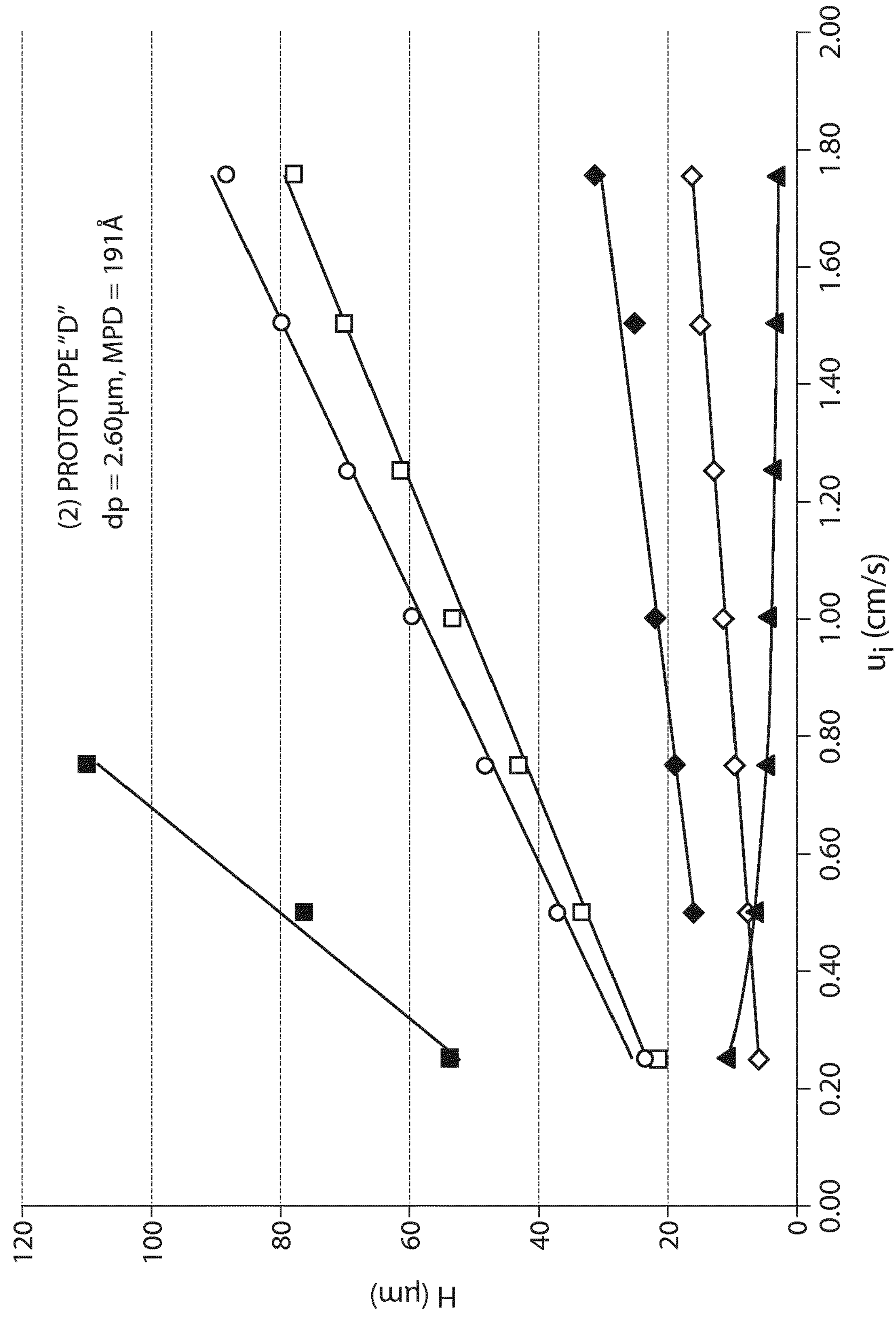
(2) PROTOTYPE "D"
dp = 2.60μm, MPD = 191Å
H (μm)
120
100
80
60
40
20
0
0.00
0.20
0.40
0.60
0.80
1.00
1.20
1.40
1.60
1.80
2.00
ui (cm/s)

Fig. 4

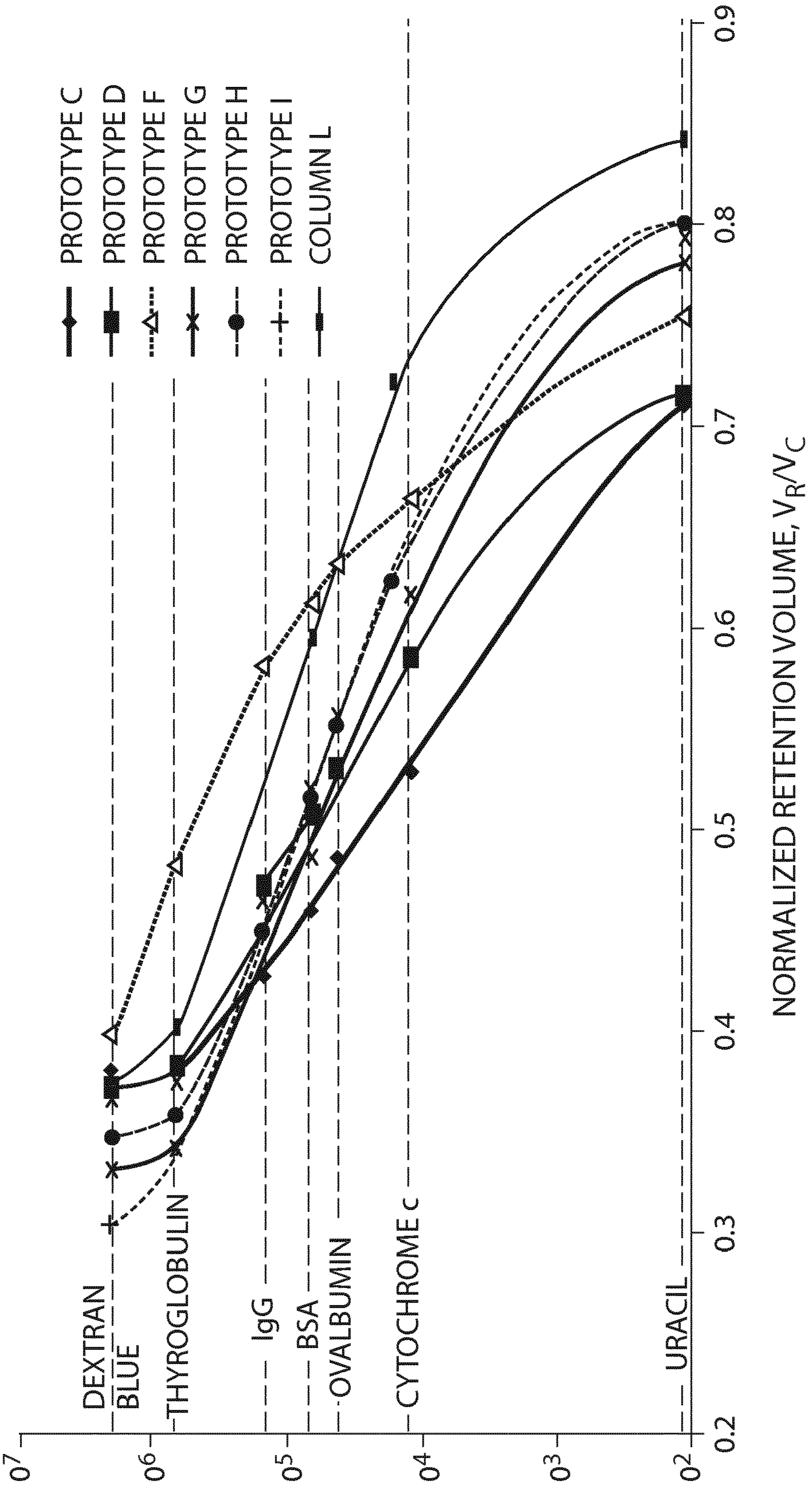
PROTOTYPE C
PROTOTYPE D
PROTOTYPE F
PROTOTYPE G
PROTOTYPE H
PROTOTYPE I
COLUMN L
DEXTRAN BLUE
THYROGLOBULIN
IgG
BSA
OVALBUMIN
CYTOCHROME c
URACIL
MOLECULAR WEIGHT (Da)
$10^7$
$10^6$
$10^5$
$10^4$
$10^3$
$10^2$
0.2
0.3
0.4
0.5
0.6
0.7
0.8
0.9
NORMALIZED RETENTION VOLUME, $V_R/V_C$

Fig. 5

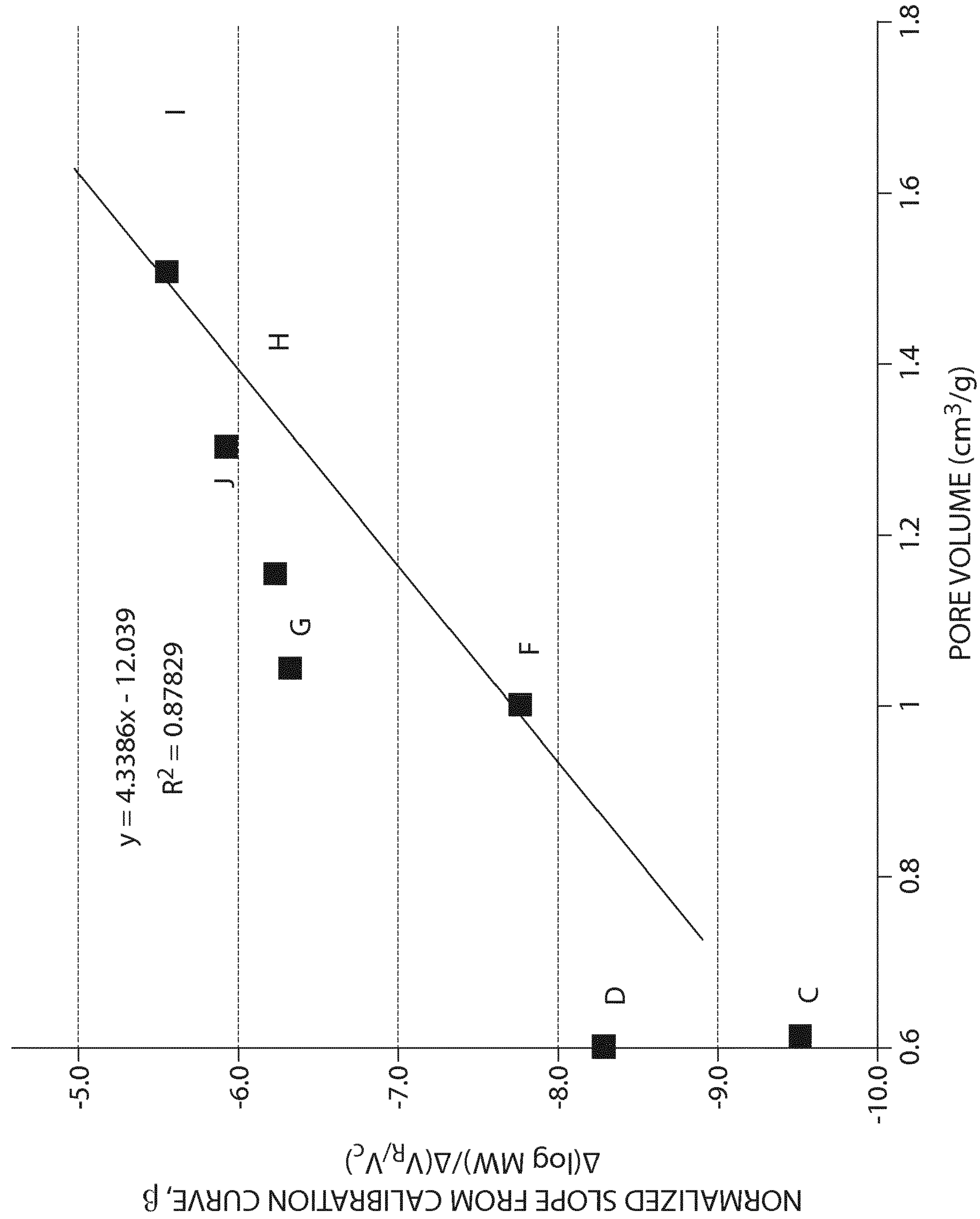
y = 4.3386x - 12.039
R2 = 0.87829
NORMALIZED SLOPE FROM CALIBRATION CURVE, β
Δ(log MW)/Δ(VR/Vc)
-5.0
-6.0
-7.0
-8.0
-9.0
-10.0
0.6
0.8
1
1.2
1.4
1.6
1.8
PORE VOLUME (cm3/g)
C
D
F
G
H
I
J

Fig. 6

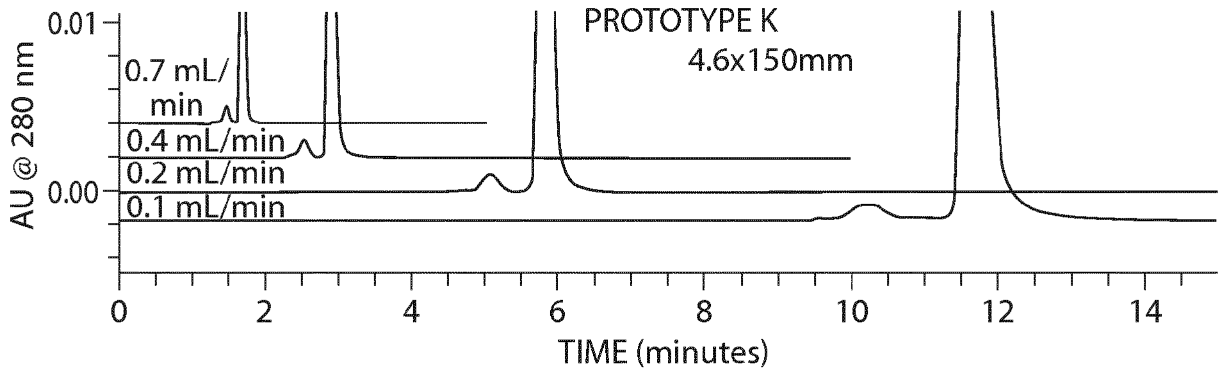
0.01
0.00
AU @ 280 nm
0.7 mL/
min
0.4 mL/min
0.2 mL/min
0.1 mL/min
PROTOTYPE K
4.6x150mm
0
2
4
6
8
10
12
14
TIME (minutes)

Fig. 7

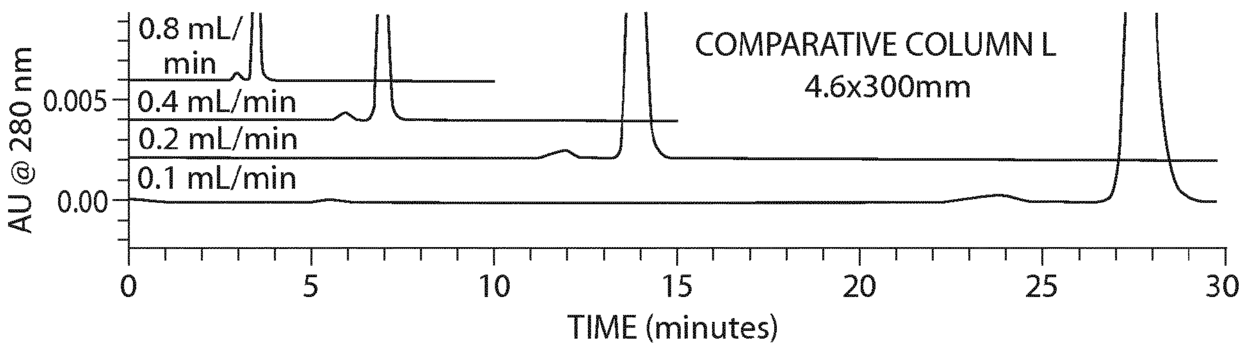
0.005
0.00
AU @ 280 nm
0.8 mL/
min
0.4 mL/min
0.2 mL/min
0.1 mL/min
COMPARATIVE COLUMN L
4.6x300mm
0
5
10
15
20
25
30
TIME (minutes)

Fig. 8

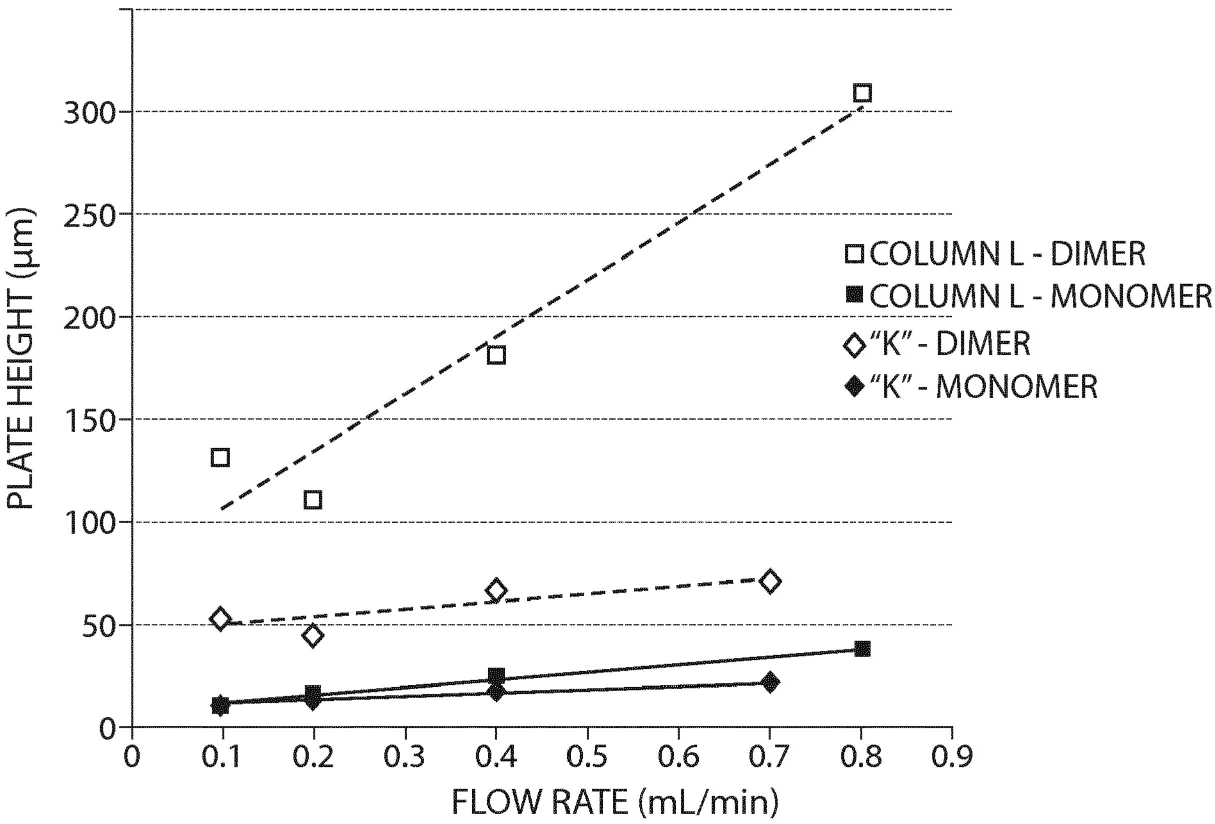

PLATE HEIGHT (µm)
0
50
100
150
200
250
300
0
0.1
0.2
0.3
0.4
0.5
0.6
0.7
0.8
0.9
FLOW RATE (mL/min)
COLUMN L - DIMER
COLUMN L - MONOMER
"K" - DIMER
"K" - MONOMER


Fig. 9

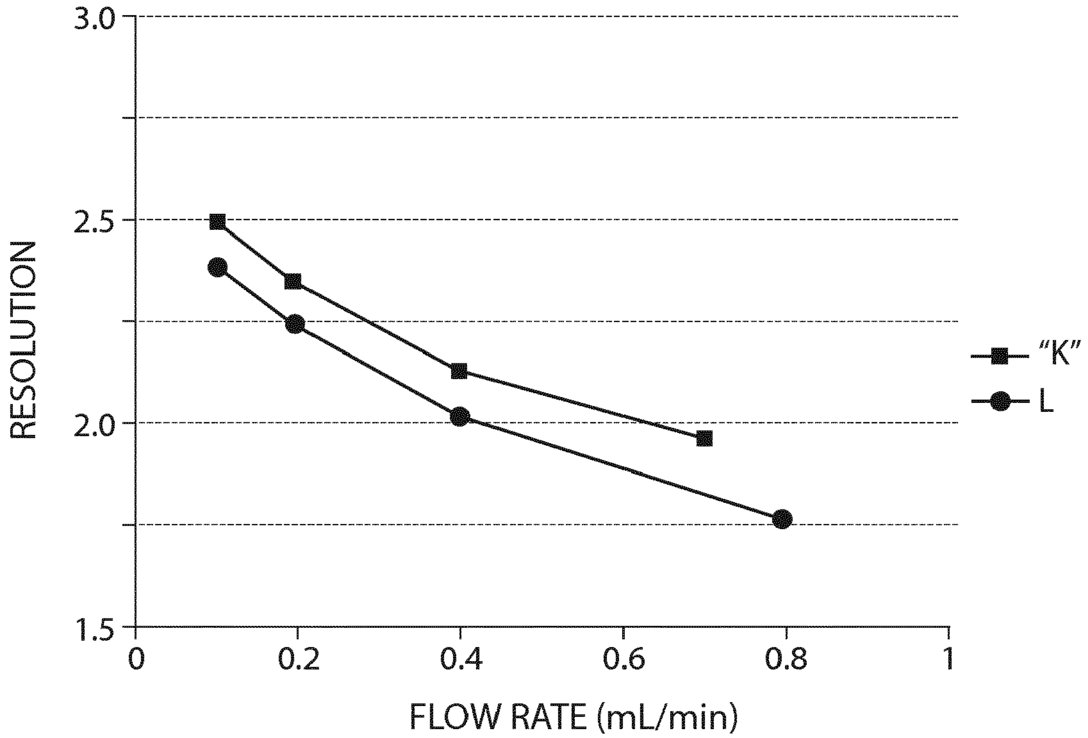


Fig. 10

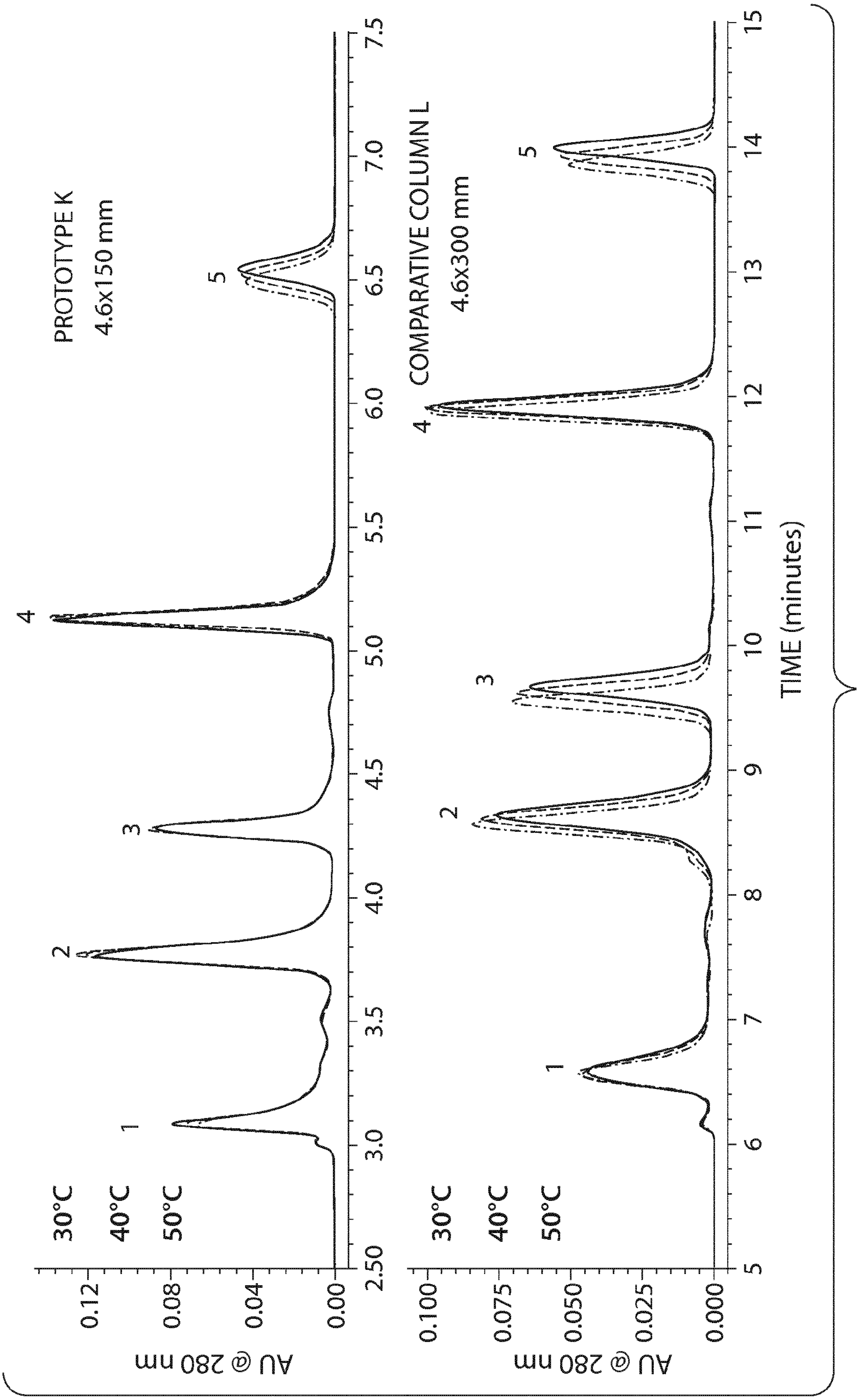
PROTOTYPE K
4.6x150 mm
COMPARATIVE COLUMN L
4.6x300 mm
30°C
40°C
50°C
1
2
3
4
5
AU @ 280 nm
0.00
0.04
0.08
0.12
0.000
0.025
0.050
0.075
0.100
2.50
3.0
3.5
4.0
4.5
5.0
5.5
6.0
6.5
7.0
7.5
5
6
7
8
9
10
11
12
13
14
15
TIME (minutes)

Fig. 11

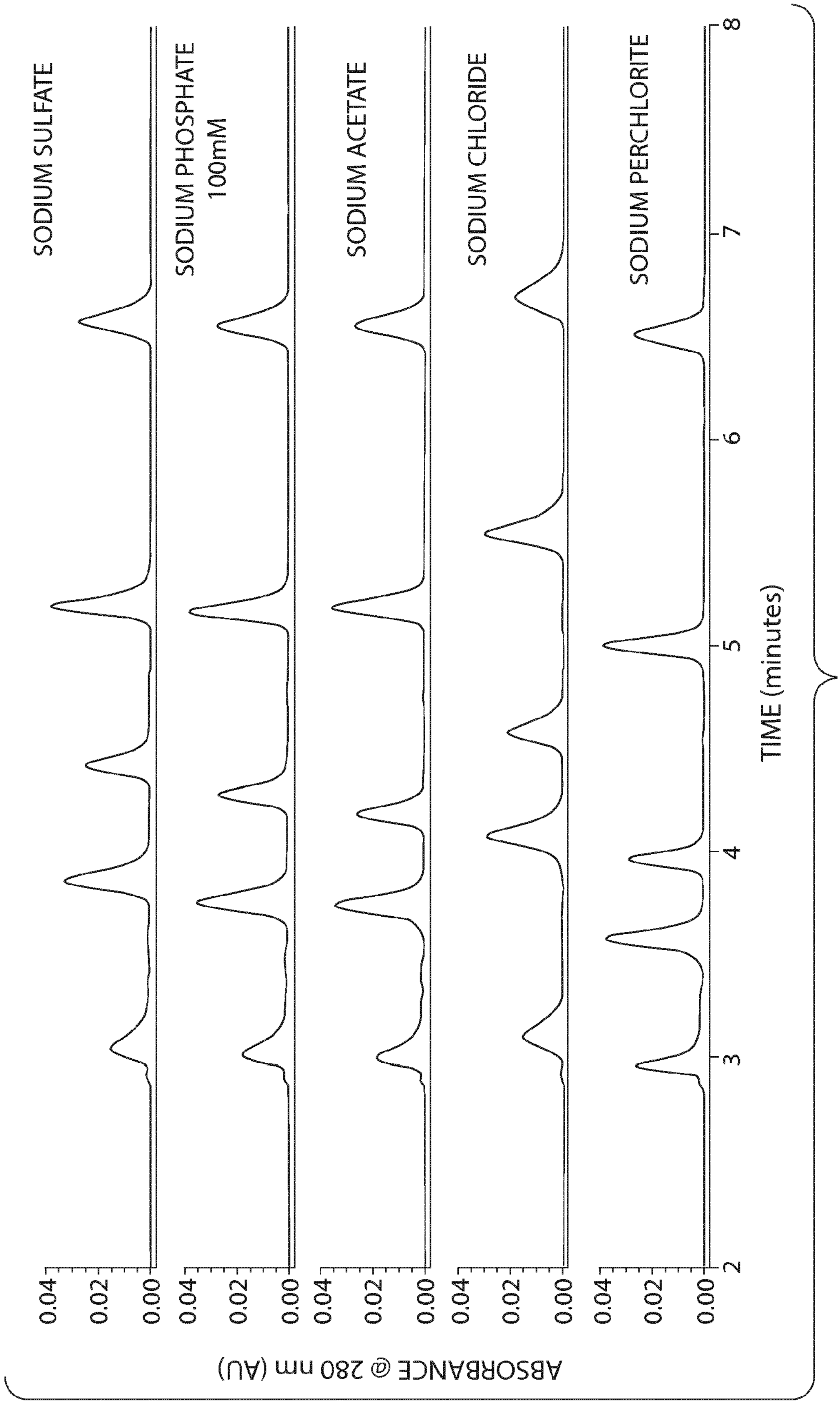
SODIUM SULFATE
SODIUM PHOSPHATE 100mM
SODIUM ACETATE
SODIUM CHLORIDE
SODIUM PERCHLORITE
ABSORBANCE @ 280 nm (AU)
0.04
0.02
0.00
TIME (minutes)
2
3
4
5
6
7
8

Fig. 12

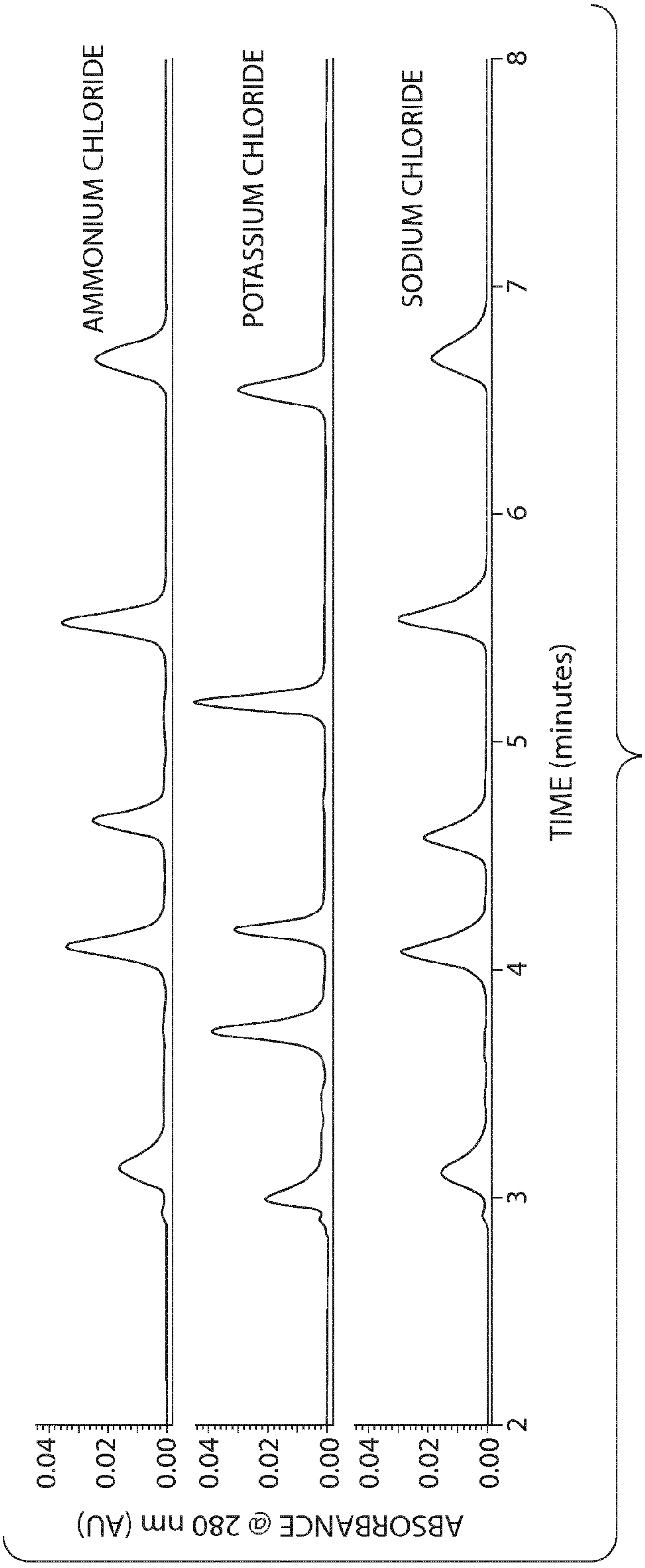
AMMONIUM CHLORIDE
POTASSIUM CHLORIDE
SODIUM CHLORIDE
ABSORBANCE @ 280 nm (AU)
0.04
0.02
0.00
TIME (minutes)
2
3
4
5
6
7
8

Fig. 13

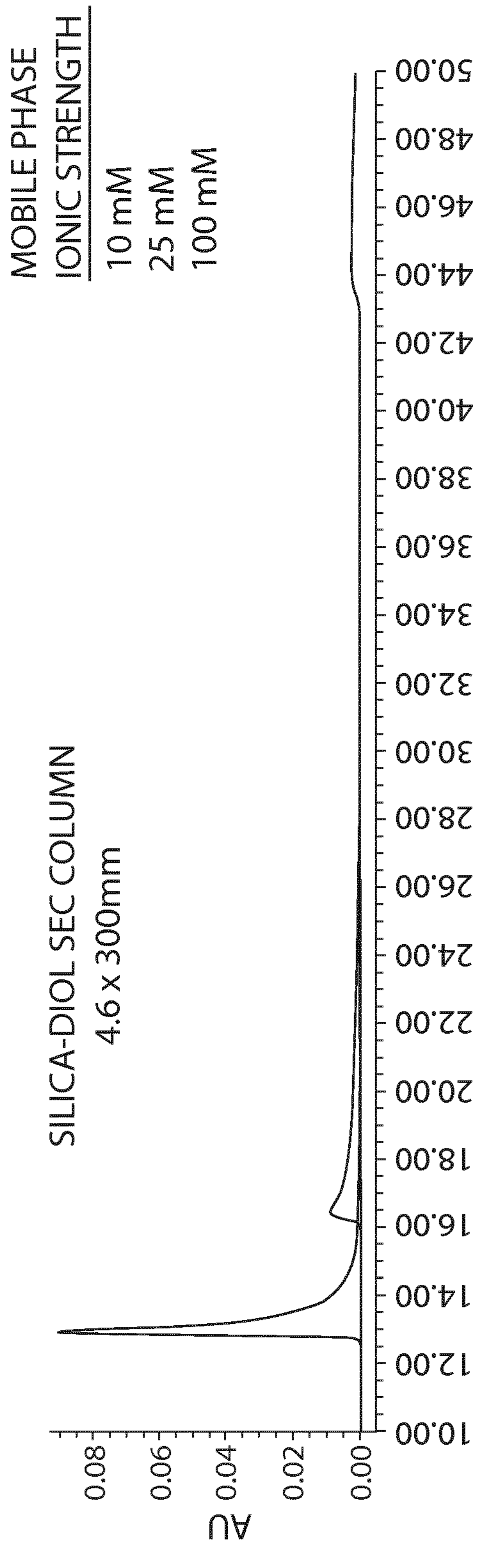


Fig. 14B

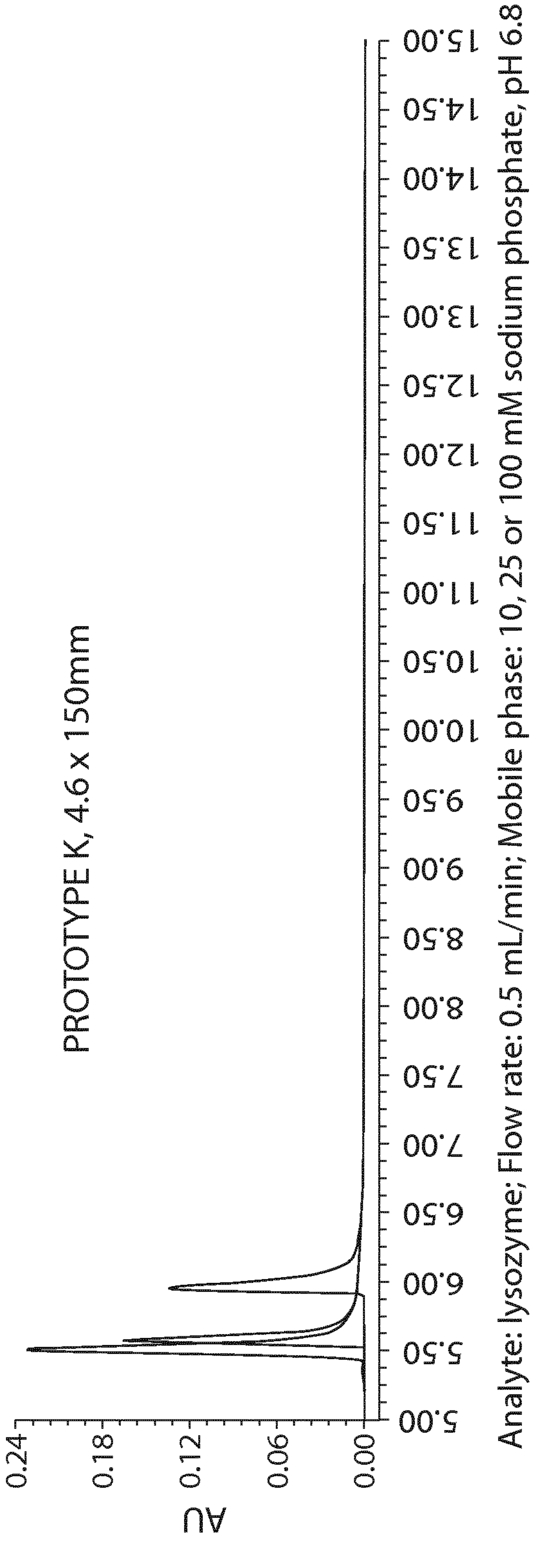


Fig. 14A

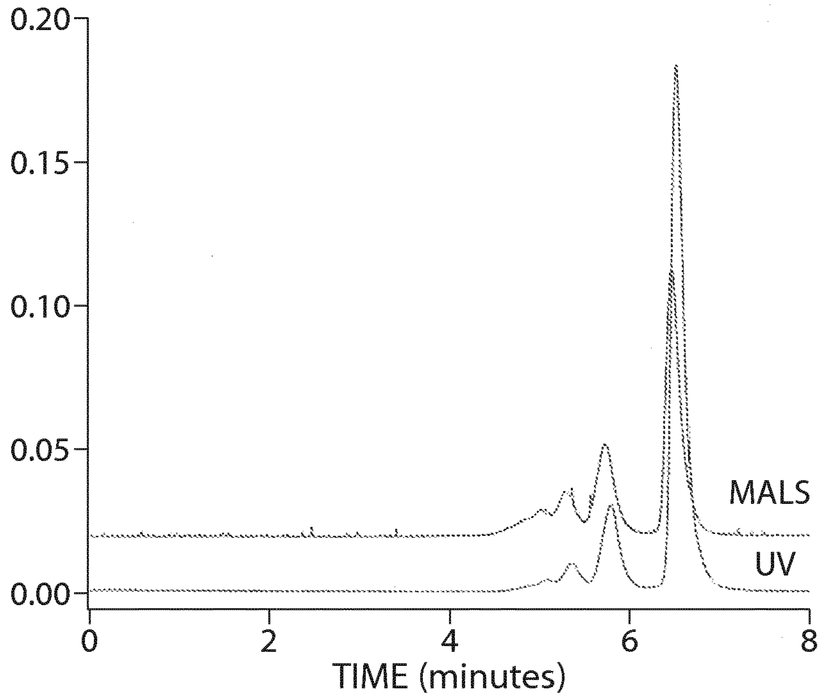
0.20
0.15
0.10
0.05
0.00
0
2
4
6
8
TIME (minutes)
MALS
UV

Fig. 15

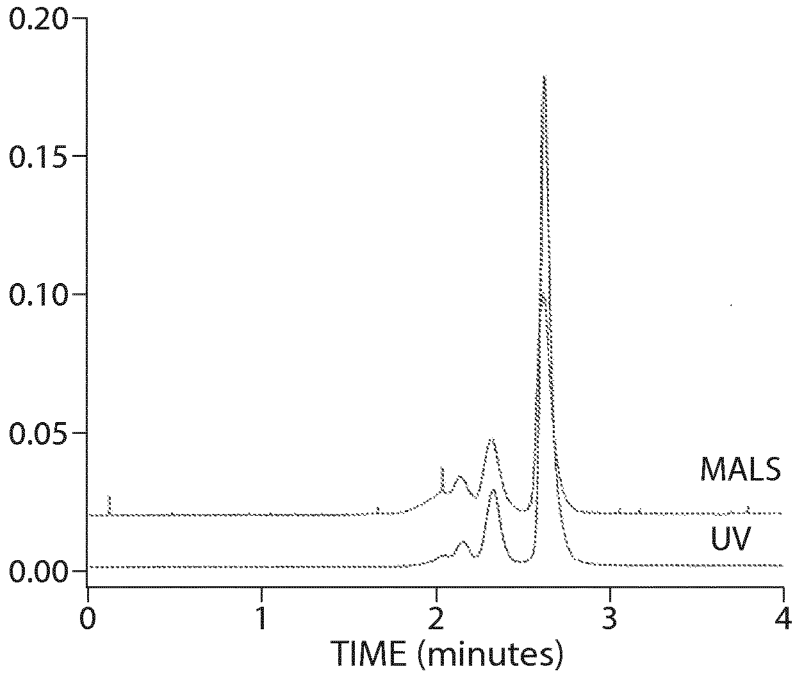
0.20
0.15
0.10
0.05
0.00
0
1
2
3
4
TIME (minutes)
MALS
UV

Fig. 16

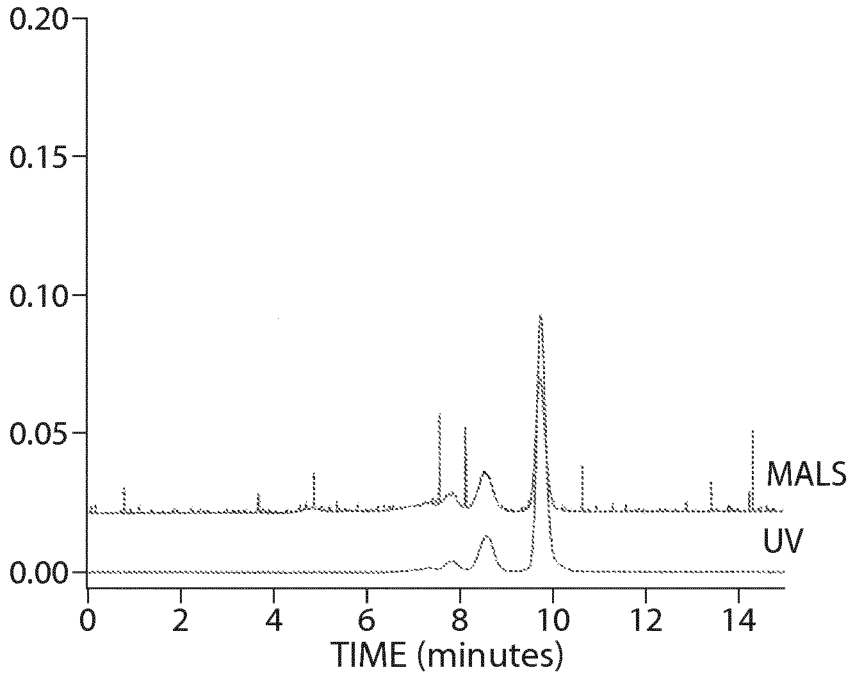
0.20
0.15
0.10
0.05
0.00
MALS
UV
0
2
4
6
8
10
12
14
TIME (minutes)

Fig. 17

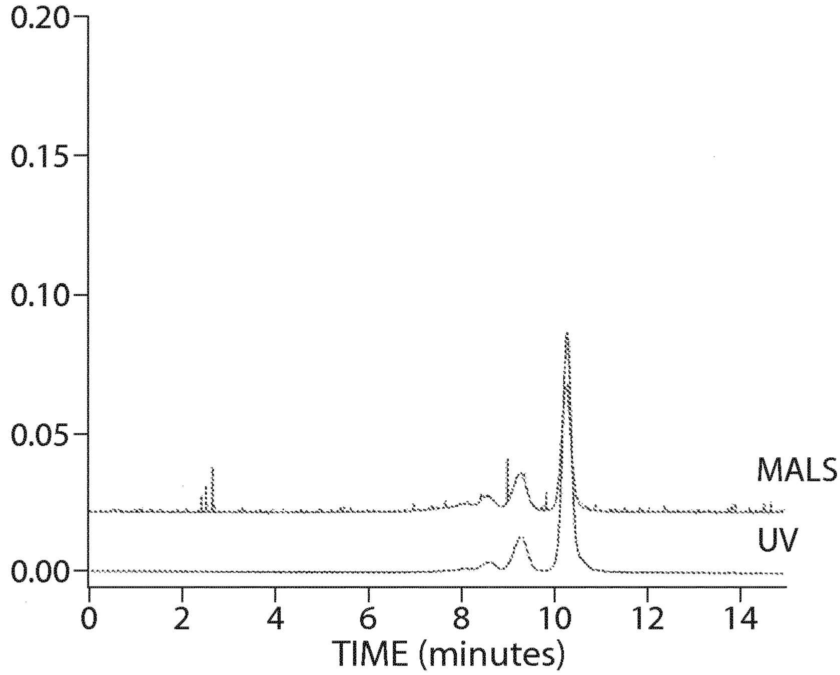
0.20
0.15
0.10
0.05
0.00
MALS
UV
0
2
4
6
8
10
12
14
TIME (minutes)

Fig. 18

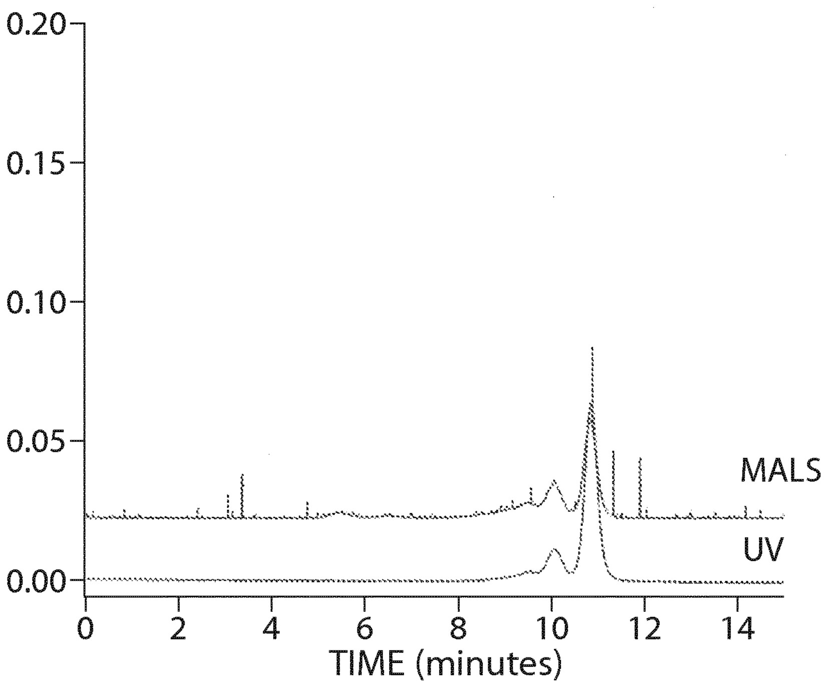


Fig. 19

Europäisches Patentamt
European Patent Office
Office européen des brevets

# EUROPEAN SEARCH REPORT

Application Number
EP 22 15 1286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 874 518 A (KIRKLAND JOSEPH J [US] ET AL) 17 October 1989 (1989-10-17)<br>* column 2, lines 40-65 *<br>* column 3, lines 29-34 *<br>* column 4, lines 13-34 *<br>* column 9, lines 28-44 *<br>* column 9, lines 47-40 *<br>* column 10, lines 4-28 *<br>* column 10, lines 54-63 *<br>* column 12, lines 1-5 *<br>* example 10 *<br>----- | 10-14 | INV.<br>B01J20/28<br>B01J20/282<br>B01J20/286 |
| Y | PORSCH ET AL: "Epoxy- and diol-modified silica: Optimization of surface bonding reaction",<br>JOURNAL OF CHROMATOGRAPHY, ELSEVIER SCIENCE PUBLISHERS B.V, NL,<br>vol. 653, no. 1,<br>29 October 1993 (1993-10-29), pages 1-7, XP026539329,<br>ISSN: 0021-9673, DOI: 10.1016/0021-9673(93)80385-L<br>[retrieved on 1993-10-29]<br>* page 1, left-hand column, lines 1-21 *<br>* page 2, left-hand column, line 18 - right-hand column, line 13 *<br>* page 3, left-hand column, lines 12-23 *<br>* page 5, right-hand column, line 30 - page 6, left-hand column, line 2 *<br>* figure 1 *<br>----- | 10-14 | TECHNICAL FIELDS SEARCHED (IPC)<br>B01J |
| Y | US 2005/178730 A1 (LI GUANG Q [US]) 18 August 2005 (2005-08-18)<br>* paragraph [0013] - paragraph [0016] *<br>* paragraph [0033] *<br>* paragraph [0034] *<br>* paragraph [0052] *<br>* claim 9 *<br>-----<br>-/-- | 10-14 | |

The present search report has been drawn up for all claims

| Place of search | Date of completion of the search | Examiner |
|---|---|---|
| The Hague | 24 May 2022 | Zalfen, Alina |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 15 1286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/144770 A1 (GRANGER JENNIFER H [US] ET AL) 6 July 2006 (2006-07-06) | 1-9 | |
| Y | * paragraph [0010] *<br>* paragraph [0014] *<br>* paragraph [0039] *<br>* paragraph [0042] *<br>* paragraph [0044] - paragraph [0045] *<br>* paragraph [0085] - paragraph [0087] *<br>* paragraph [0089] *<br>* paragraph [0112] - paragraph [0113] *<br>* claim 104 *<br>----- | 10-14 | |
| | | | TECHNICAL FIELDS SEARCHED (IPC) |

The present search report has been drawn up for all claims

| Place of search | Date of completion of the search | Examiner |
|---|---|---|
| The Hague | 24 May 2022 | Zalfen, Alina |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 15 1286

This annex lists the patent family members relating to the patent documents cited in the above-mentioned European search report. The members are as contained in the European Patent Office EDP file on
The European Patent Office is in no way liable for these particulars which are merely given for the purpose of information.

24-05-2022

| Patent document cited in search report | | Publication date | Patent family member(s) | | Publication date |
|---|---|---|---|---|---|
| US 4874518 | A | 17-10-1989 | NONE | | |
| US 2005178730 | A1 | 18-08-2005 | AU 2005215377 | A1 | 01-09-2005 |
| | | | CA 2554650 | A1 | 01-09-2005 |
| | | | CN 1917953 | A | 21-02-2007 |
| | | | EP 1711258 | A1 | 18-10-2006 |
| | | | JP 4887160 | B2 | 29-02-2012 |
| | | | JP 2007522476 | A | 09-08-2007 |
| | | | KR 20060129382 | A | 15-12-2006 |
| | | | TW I362287 | B | 21-04-2012 |
| | | | US 2005178730 | A1 | 18-08-2005 |
| | | | US 2006207923 | A1 | 21-09-2006 |
| | | | WO 2005079975 | A1 | 01-09-2005 |
| US 2006144770 | A1 | 06-07-2006 | DE 112004000231 | T5 | 09-02-2006 |
| | | | GB 2413507 | A | 02-11-2005 |
| | | | JP 4791352 | B2 | 12-10-2011 |
| | | | JP 2006517300 | A | 20-07-2006 |
| | | | US 2006144770 | A1 | 06-07-2006 |
| | | | WO 2004071615 | A2 | 26-08-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61286582
- US 61355970 B
- US 4017528 A
- US 6528167 B
- US 6686035 B
- US 7175913 B
- US 6686035 B2

### Non-patent literature cited in the description

- **A.M. STRIEGEL.** Modern Size-Exclusion Chromatography: Practice of Gel Permeation and Gel Filtration Chromatography. Wiley, 2009
- **T. W. GREEN ; P. G. M. WUTS.** Protective Groups in Organic Synthesis. John Wiley & Sons, Inc, 1999
- **MASSIOT, D. ; FAYON, F. ; CAPRON, M. ; KING, I. ; LE CALVÉ, S. ; ALONSO, B. ; DURAND, J.-O. ; BUJOLI, B. ; GAN, Z. ; HOATSON, G.** *Magn. Reson. Chem.,* 2002, vol. 40, 70-76
- Ullmann's Encyclopedia of Industrial Chemistry. VCH Verlagsgesellschaft mbH, 1988, vol. B2
- **D HELD ; G REINHOLD ; P KILZ.** U-GPC? Making GPC/SEC Faster. *The Column,* 06 April 2010, 10-14